# FASCICULE DE BREVET EUROPEEN

(11) **EP 4 314 626 B1**
(45) Date de publication et mention de la délivrance du brevet: **30.09.2026**
(21) Numéro de dépôt: 22717616.1
(22) Date de dépôt: 24.03.2022
(51) Int. Cl.: F17C 3/02

(54) **PROCÉDÉ DE TRAÇAGE POUR LA CONSTRUCTION D'UNE INSTALLATION DE STOCKAGE DE GAZ LIQUÉFIÉ COMPORTANT UNE STRUCTURE PORTEUSE POLYGONALE**
VERFOLGUNGSVERFAHREN FÜR DEN AUFBAU EINER FLÜSSIGGASSPEICHERANLAGE MIT POLYGONALER TRAGESTRUKTUR
TRACING METHOD FOR THE CONSTRUCTION OF A LIQUEFIED GAS STORAGE INSTALLATION COMPRISING A POLYGONAL BEARING STRUCTURE

(30) Priorité: 24.03.2021 FR 2102974
(43) Date de publication de la demande: 07.02.2024
(73) Titulaire: GAZTRANSPORT ET TECHNIGAZ, 78470 Saint-Rémy-lès-Chevreuse (FR)
(72) Inventeur: VOLUT, Mikaël, 78470 SAINT-REMY-LES-CHEVREUSE (FR); COURTOT, Michael, 78470 SAINT REMY-LES-CHEVREUSE (FR); LAMDOUAR, Othman, 78470 SAINT-REMY-LES-CHEVREUSE (FR); FRAYSSE, Vincent, 78470 SAINT-REMY-LES-CHEVREUSE (FR); DORY, Vincent, 78470 SAINT-REMY-LES-CHEVREUSE (FR)
(74) Mandataire: Loyer & Abello
(86) Numéro de dépôt international: PCT/EP2022/057848
(87) Numéro de publication internationale: WO 2022/200539

(56) Documents cités:
- EP-A1- 1 568 965
- FR-A1- 2 991 429
- KR-A- 20200 039 948
- US-A1- 2010 018 965
- US-B2- 8 550 276

## Description

### Domaine technique

L'invention se rapporte à une installation de stockage de gaz liquéfié et à un procédé de traçage pour la construction de cette installation. Plus particulièrement, l'installation de stockage de gaz liquéfié comporte une structure porteuse ayant une paroi de fond polygonale régulière.

### Technique antérieure

On connaît par le document US 8,550,276 B2 une installation de stockage de gaz liquéfié comprenant une paroi verticale et une paroi de fond, où ladite paroi de fond présente une pluralité de secteurs images les uns des autres par rotation, et où ladite paroi de fond a la forme d'un polygone régulier dont chaque côté correspond à un desdits secteurs. Une telle structure est avantageuse en cela qu'elle permet de réaliser chaque secteur avec des éléments identiques, ce qui diminue le nombre d'éléments différents à employer. En particulier, une grande partie de la paroi de fond est réalisée à l'aide d'éléments rectangulaires de dimensions identiques.

Une autre installation de stockage de gaz liquéfié de ce type est connue par le document WO 2011/048300 A1. Dans ce document également, l'installation comprend une paroi verticale et une paroi de fond. La paroi verticale présente une pluralité de pans verticaux. La paroi de fond inclut une pluralité de pièces rectangulaires réparties en secteurs images les uns des autres par rotation, les bords des pièces rectangulaires d'un desdits secteurs étant respectivement parallèles et perpendiculaires à l'un desdits pans verticaux. Toutefois, contrairement au document US 8,550,276 B2, le nombre desdits pans verticaux est le double du nombre desdits secteurs. Le nombre de pans verticaux est par exemple choisi égal à 56. Comme cela décrit dans ce document, le fait de prévoir un nombre de pans verticaux qui est élevé, en particulier le double du nombre des secteurs, permet de limiter la quantité de matière nécessaire pour réaliser la structure porteuse devant recevoir la paroi verticale la paroi de fond, à volume de stockage égal.

Dans ces deux documents, la structure porteuse est par exemple réalisée en béton. Le document KR 2020 0039948 A décrit un procédé d'installation de caissons isolants de la cuve de stockage de GNL, ayant une étape de préfabrication d'une pluralité de caissons standard disposés à l'intérieur d'une cuve, centrés selon une direction latérale de chaque pan porteur vertical, et, par dimensionnement théorique, de caissons non standard installés entre les caissons standard, aux deux extrémités de la pluralité de caissons standard.

### Résumé de l'invention

Certains aspects de l'invention partent du constat que la structure porteuse présente, en pratique, certains écarts dimensionnels avec la forme de polygone régulier idéalement prévue. De tels écarts dimensionnels peuvent rendre difficile la construction de l'installation, et en particulier la tâche de raccorder les ondulations de la membrane d'étanchéité de la paroi de fond avec les ondulations de la membrane d'étanchéité de la paroi verticale. Or la continuité des ondulations est très importante pour permettre une bonne tenue mécanique de la membrane d'étanchéité.

Une idée à la base de l'invention consiste, d'une part à assurer qu'un écart angulaire azimutal entre des rangées de modules de paroi isolants plans disposées sur des pans porteurs verticaux adjacents soit très proche de la valeur attendue compte tenue de la forme de polygone régulier idéalement prévue, sans égard pour les tolérances dimensionnelles de la structure porteuse ; et d'autre part à rattraper des variations dimensionnelles locales résultant des déviations entre la structure porteuse réelle et la forme idéalement prévue au niveau de zones d'arête de la cuve situées entre ces rangées de modules de paroi isolants plans. Une autre idée à la base de l'invention consiste à utiliser des mesures, réalisées sur la structure porteuse une fois construite, pour aider à ajuster la position des rangées de modules de paroi isolants plans disposées sur chacun des pans porteurs verticaux.

L'invention propose ainsi une installation de stockage de gaz liquéfié comportant :
une structure porteuse présentant un espace interne délimité par une paroi porteuse de fond et une paroi porteuse verticale, un contour de ladite paroi porteuse de fond ayant la forme d'un polygone régulier à N côtés présentant des tolérances dimensionnelles, N étant un nombre entier supérieur ou égal à 3,
ladite paroi porteuse verticale étant composée de N pans porteurs verticaux et formant une surface cylindrique polygonale ayant ledit polygone comme directrice, où chacun des N côtés du polygone correspond à une intersection de la paroi porteuse de fond avec l'un desdits pans porteurs verticaux ;
et une cuve étanche et thermiquement isolante installée dans l'espace interne de la structure porteuse, la cuve comportant une paroi de fond disposée sur la paroi porteuse de fond et une paroi verticale disposée sur la paroi porteuse verticale,
ladite paroi de fond comportant une pluralité de secteurs angulaires images les uns des autres par une rotation d'un angle prédéterminé autour d'un axe vertical, l'angle prédéterminé étant égal à k.360°/N, où k est un nombre entier positif,
ladite paroi verticale comprenant une rangée verticale de modules de paroi isolants de coin disposée le long de chaque arête de la paroi porteuse verticale séparant deux pans porteurs verticaux adjacents et une rangée verticale de modules de paroi isolants plans disposée sur chaque pan porteur vertical,
dans laquelle un écart angulaire azimutal, par rapport audit axe vertical, entre deux rangées de modules de paroi isolants plans disposées sur deux pans porteurs verticaux adjacents est égal à 360°/N de préférence avec une précision meilleure que 5 mm dans une direction ortho-radiale sur lesdits pans porteurs verticaux adjacents,

ladite paroi verticale comprenant des éléments isolants de réglage pour ajuster des écarts entre les rangées verticales de modules de paroi isolants de coin et les rangées verticales de modules de paroi isolants plans,
dans laquelle chaque rangée verticale de modules de paroi isolants plans comporte une membrane métallique étanche présentant des ondulations verticales,
et dans laquelle chaque secteur angulaire est orienté par rapport à k pan(s) porteur(s) vertical(aux) associé(s) audit secteur angulaire de sorte qu'une membrane métallique étanche du secteur angulaire comporte des ondulations rayonnantes orientées perpendiculairement à chaque pan porteur vertical associé, lesdites ondulations rayonnantes étant reliées continûment aux ondulations verticales de la membrane métallique étanche de la rangée verticale de modules de paroi isolants plans disposée sur le pan porteur vertical associé.

Grâce au fait que l'écart angulaire azimutal, par rapport à l'axe vertical, entre deux rangées de modules de paroi isolants plans disposées sur deux pans porteurs verticaux adjacents soit égal à 360°/N avec une précision très élevée dans la direction ortho-radiale, il est possible de disposer les rangées de modules de paroi isolants plans sur les pans porteurs verticaux quasiment sans tenir compte des déviations de la structure porteuse réelle par rapport à la forme idéalement prévue, de façon à permettre le raccord continu entre les ondulations verticales des modules de paroi isolants plans et les ondulations rayonnantes des secteurs angulaires de la paroi de fond. Par « direction ortho-radiale » on entend une direction perpendiculaire à une direction radiale, la direction radiale étant la direction reliant l'axe vertical à un pan porteur vertical.

Selon des modes de réalisation, l'installation de stockage de gaz liquéfié peut présenter une ou plusieurs des caractéristiques suivantes.

Selon un mode de réalisation, l'écart angulaire azimutal, par rapport audit axe vertical, entre deux rangées de modules de paroi isolants plans disposées sur deux pans porteurs verticaux adjacents est égal à 360°/N de préférence avec une précision meilleure que 3 mm, plus préférablement meilleure que 2 mm, plus préférablement encore meilleure que 1 mm, dans une direction ortho-radiale sur lesdits pans porteurs verticaux adjacents.

Selon un mode de réalisation, N est pair. Selon un mode de réalisation particulier, N est égal à 56. Selon un autre mode de réalisation particulier, N est égal à 8.

Le nombre entier k est égal au nombre de pans porteurs verticaux de la paroi porteuse verticale, divisé par le nombre de secteurs angulaires de la paroi de fond de la cuve. Selon un mode de réalisation, k est égal à 1 ou à 2.

Par module de paroi isolant plan et module de paroi isolant de coin, on désigne des assemblages d'éléments modulaires métalliques et d'éléments modulaires isolants pouvant servir à réaliser une barrière d'isolation thermique et la membrane métallique étanche au sein de la paroi verticale de la cuve.

Selon un mode de réalisation, chaque module de paroi isolant plan d'une rangée verticale de modules de paroi isolants plans comprend au moins un bloc isolant plan prenant appui sur le pan porteur vertical correspondant, et au moins une tôle métallique ondulée fixée sur ledit bloc isolant plan, la tôle métallique ondulée faisant partie de la membrane métallique étanche.

Selon un mode de réalisation, chaque rangée verticale de modules de paroi isolants de coin comporte une membrane métallique étanche présentant une ondulation verticale de coin s'étendant le long de ladite rangée, au droit de l'arête correspondante de la paroi porteuse verticale.

Selon un mode de réalisation, chaque module de paroi isolant de coin d'une rangée verticale de modules de paroi isolants de coin comprend :
un bloc isolant de coin disposé le long d'une portion de l'arête correspondante de la paroi porteuse verticale et prenant appui sur les deux pans porteurs verticaux situés de part et d'autre de ladite arête ; et
une tôle métallique de coin fixée sur le bloc isolant de coin.

Selon un mode de réalisation, chaque tôle métallique de coin présente une portion de l'ondulation verticale de coin de la rangée verticale de modules de paroi isolants de coin.

Selon un mode de réalisation, l'ondulation verticale de coin n'est pas reliée continûment aux ondulations rayonnantes de la membrane métallique étanche des secteurs angulaires.

Grâce à cette discontinuité, on facilite le placement de la rangée verticale de modules de paroi isolants de coin le long de l'arête de la structure porteuse, malgré les éventuelles imperfections de positionnement de cette arête, car un alignement précis de l'ondulation verticale de coin avec les ondulations rayonnantes des secteurs angulaires n'est pas requis dans ce cas.

Selon un mode de réalisation, les tôles métalliques de coin d'une rangée verticale de modules de paroi isolants de coin sont reliées de manière étanche aux tôles métalliques ondulées de deux rangées verticales de modules de paroi isolants plans situées de part et d'autre de la rangée verticale de modules de paroi isolants de coin, et les éléments isolants de réglage comprennent des zones de bordure verticales jogglinées que présentent les tôles métalliques de coin et/ou les tôles métalliques ondulées de deux rangées verticales de modules de paroi isolants plans.

La largeur de ces zones de bordure jogglinées peut être conçue en fonction des tolérances de fabrication de la structure porteuse afin d'offrir une plage de réglage suffisante pour absorber toutes les déviations de la structure porteuse.

Selon un mode de réalisation, les éléments isolants de réglage comprennent des éléments de remplissage isolants disposés entre les blocs isolants de coin des modules de paroi isolants de coin et les blocs isolants plans des modules de paroi isolants plans.

La largeur maximale de ces éléments de remplissage peut être conçue en fonction des tolérances de fabrication de la structure porteuse afin d'offrir une plage de réglage suffisante pour absorber toutes les déviations de la structure porteuse. Par ailleurs, de tels éléments de remplissage peuvent être redécoupés sur mesure au cours de la construction de la cuve.

Selon un mode de réalisation, la cuve comprend une pluralité de pièces de jonction d'angle disposées à cheval sur la paroi de fond et la paroi verticale, chaque pièce de jonction d'angle assurant un raccord continu entre une ondulation rayonnante de la membrane métallique étanche d'un secteur angulaire de la paroi de fond et une ondulation verticale de la membrane métallique étanche de la rangée verticale de modules de paroi isolants plans disposée sur un pan porteur vertical associé audit secteur angulaire.

Selon un mode de réalisation, l'installation de stockage de gaz liquéfié est destinée à être installée à terre. Dans ce cas, la structure porteuse peut être réalisée en béton.

Selon un autre mode de réalisation, l'installation de stockage de gaz liquéfié est destinée à être installée à bord d'une structure flottante, telle qu'un navire. Dans ce cas, la structure porteuse peut être une portion d'une double coque que présente la structure flottante.

Selon un mode de réalisation, l'invention fournit aussi un procédé de traçage pour la construction d'une installation de stockage de gaz liquéfié, le procédé de traçage comprenant :
- mesurer des positions tridimensionnelles de N arêtes verticales dans une structure porteuse présentant un espace interne délimité par une paroi porteuse de fond et une paroi porteuse verticale, un contour de ladite paroi porteuse de fond ayant la forme d'un polygone régulier à N côtés présentant des tolérances dimensionnelles, N étant un nombre entier supérieur ou égal à 3,
   ladite paroi porteuse verticale étant composée de N pans porteurs verticaux séparés par lesdits N arêtes verticales et formant une surface cylindrique polygonale ayant ledit polygone comme directrice, où chacun des N côtés du polygone correspond à une intersection de la paroi porteuse de fond avec l'un desdits pans porteurs verticaux;
- définir une structure étoilée idéale composée d'un axe vertical et de N demi-plans verticaux délimités par ledit axe vertical et orientés autour dudit axe vertical dans des directions azimutales mutuellement espacées de 360°/N ;
- en fonction des positions tridimensionnelles mesurées des N arêtes verticales, déterminer par simulation numérique des positions tridimensionnelles de N lignes d'intersection entre les N demi-plans verticaux de la structure étoilée idéale et les N pans porteurs verticaux de la paroi porteuse verticale lorsque ledit axe vertical est placé dans l'espace interne de la structure porteuse,
- rechercher par simulation numérique une position cible de la structure étoilée idéale, la position cible étant définie par la position d'une intersection de l'axe vertical avec la paroi porteuse de fond et par une orientation azimutale de la structure étoilée idéale dans l'espace interne de la structure porteuse,
   dans lequel la position cible assure que chaque demi-plan vertical de la structure étoilée idéale coupe un unique pan porteur vertical respectif de la paroi porteuse verticale au niveau d'une ligne d'intersection et que des distances entre chaque ligne d'intersection et les deux arêtes verticales délimitant ledit unique pan porteur vertical respectif satisfont des critères dimensionnels prédéterminés ;
- tracer les lignes d'intersection correspondant à la position cible de la structure étoilée idéale sur les N pans porteurs verticaux de préférence avec une précision meilleure que 5 mm dans une direction ortho-radiale.

Un tel procédé permet d'obtenir l'installation de stockage de gaz liquéfié décrite ci-dessus et présente les mêmes avantages que celle-ci.

Selon un mode de réalisation, mesurer les positions tridimensionnelles des N arêtes verticales comprend :
- obtenir N premières mesures de position tridimensionnelle, chaque première mesure de position tridimensionnelle étant une mesure en trois dimensions de la position d'un point situé, à une première hauteur par rapport à la paroi porteuse de fond, sur une des N arêtes de la paroi porteuse verticale;
- obtenir N deuxièmes mesures de position tridimensionnelle, chaque deuxième mesure de position tridimensionnelle étant une mesure en trois dimensions de la position d'un point situé, à une deuxième hauteur par rapport à la paroi porteuse de fond, sur une des N arêtes de la paroi porteuse verticale.

Selon un mode de réalisation, le procédé de traçage comprend en outre le fait de calculer, par une méthode d'interpolation, la position d'un plan d'interpolation à partir des N premières mesures de position tridimensionnelle.

Selon un mode de réalisation, les N deuxièmes mesures de position tridimensionnelle sont effectuées au niveau d'un deuxième plan qui est parallèle au plan d'interpolation et distant du plan d'interpolation d'une distance égale à la différence entre la deuxième hauteur et la première hauteur.

Selon un mode de réalisation, la structure étoilée idéale est composée d'un axe vertical, de N demi-plans verticaux délimités par ledit axe vertical et orientés autour dudit axe vertical dans des directions azimutales mutuellement espacées de 360°/N, et d'un plan horizontal, le plan horizontal étant perpendiculaire à l'axe vertical.

Selon un mode de réalisation, le procédé de traçage comprend en outre le fait de tracer, sur la paroi porteuse de fond, un point de référence correspondant à la position cible de la structure étoilée, à savoir la position de l'intersection de l'axe vertical avec la paroi porteuse de fond.

Selon un mode de réalisation, ladite position de l'intersection de l'axe vertical avec la paroi porteuse de fond est déterminée en exprimant par le calcul la position cible de la structure étoilée idéale dans un repère orthogonal associé au plan d'interpolation, sous la contrainte que le plan horizontal est confondu avec le plan d'interpolation, l'un des axes dudit repère orthogonal étant perpendiculaire au plan d'interpolation.

Selon un mode de réalisation, les lignes d'intersection sont des premières lignes d'intersection et le procédé de traçage comprend en outre le fait de tracer, sur la paroi porteuse de fond, des deuxièmes lignes d'intersection entre les N demi-plans verticaux de la structure étoilée idéale et la paroi porteuse de fond de préférence avec une précision meilleure que 5 mm.

Ces deuxièmes lignes d'intersection peuvent aussi être obtenues en tant que lignes de repère horizontales reliant le point de référence aux premières lignes d'intersection tracées sur les pans verticaux.

Selon un mode de réalisation, l'installation de stockage de gaz liquéfié est destinée à comprendre une cuve étanche et thermiquement isolante installée dans l'espace interne de la structure porteuse, la cuve comportant une paroi de fond disposée sur la paroi porteuse de fond et une paroi verticale disposée sur la paroi porteuse verticale,
ladite paroi de fond comportant une pluralité de secteurs angulaires images les uns des autres par une rotation d'un angle prédéterminé autour d'un axe vertical, l'angle prédéterminé étant égal à k.360°/N, où k est un nombre entier positif,
ladite paroi verticale comprenant une rangée verticale de modules de paroi isolants de coin disposée le long de chaque arête de la paroi porteuse verticale séparant deux pans porteurs verticaux adjacents et une rangée verticale de modules de paroi isolants plans disposée sur chaque pan porteur vertical,
des espaces de réglage verticaux étant agencés entre les rangées verticales de modules de paroi isolants de coin et les rangées verticales de modules de paroi isolants plans, et des espaces de réglages radiaux étant agencés entre les secteurs et les rangées verticales de modules de paroi isolants de coin,
les rangées verticales de modules de paroi isolants plans étant disposées sur la paroi porteuse verticale et les secteurs angulaires étant disposés sur la paroi porteuse de fond en fonction des positions des lignes d'intersection sur la paroi porteuse verticale.

Selon un mode de réalisation, les critères dimensionnels prédéterminés comprennent un ou plusieurs critères choisis parmi :
- un premier critère dimensionnel portant sur la largeur des espaces de réglage verticaux; par exemple un critère correspondant à une largeur maximale et /ou une largeur minimale des espaces de réglage verticaux et
- un deuxième critère dimensionnel portant sur la largeur des espaces de réglage radiaux, par exemple un critère correspondant à une largeur maximale et /ou une largeur minimale des espaces de réglage radiaux.

Selon un mode de réalisation, le premier critère dimensionnel consiste à vérifier que la largeur de chacun des espaces de réglage verticaux est compris dans une première plage de largeur dont une borne inférieure est une valeur strictement positive.

Un tel critère dimensionnel permet d'assurer que les espaces de réglage verticaux soient à la fois suffisamment grands pour assurer qu'il soit possible de découper des éléments de remplissage destinés à être disposés dans les espaces de réglage verticaux, et suffisamment petits pour néanmoins permettre le soudage par recouvrement des tôles de la membrane métallique étanche de la paroi verticale de la cuve.

Selon un mode de réalisation, le deuxième critère dimensionnel consiste à vérifier que la largeur de chacun des espaces de réglage radiaux est compris dans une deuxième plage de largeur dont une borne inférieure est une valeur strictement positive.

Un tel critère dimensionnel permet d'assurer que les espaces de réglage verticaux soient à la fois suffisamment grands pour assurer qu'il soit possible de découper des éléments de remplissage destinés à être disposés dans les espaces de réglage radiaux, et suffisamment petits pour néanmoins permettre le soudage par recouvrement des tôles de la membrane métallique étanche de la paroi de fond de la cuve.

Selon un mode de réalisation, les critères dimensionnels prédéterminés comprennent en outre :
- un critère d'uniformité des largeurs des espaces de réglage verticaux sur le pourtour de la paroi porteuse verticale ; et/ou
- un critère d'uniformité des largeurs des espaces de réglage radiaux pour tous les secteurs de la paroi de fond.

### Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
[Fig.1A] La [Fig.1A] est une vue partielle en perspective et en coupe d'une installation de stockage de gaz liquéfié.
[Fig.1B] La [Fig.1B] est une vue de dessus de l'installation de stockage de la [Fig.1A], permettant de distinguer le contour polygonal de la structure porteuse de la [Fig.1A].
[Fig.1C] La [Fig.1C] est une vue partielle en perspective d'un secteur de la paroi de fond d'une cuve installée dans une installation de stockage de gaz liquéfié, depuis l'intérieur de l'installation de stockage de gaz liquéfié.
[Fig.2] La [Fig.2] est une vue partielle en perspective, depuis l'intérieur de l'installation de stockage liquéfié, de l'extrémité extérieure du secteur représenté sur la [Fig.1C] ainsi que de portions de la paroi verticale de la cuve.
[Fig.3] La [Fig.3] est une vue partielle de tôles métalliques faisant partie de la membrane métallique étanche de la paroi de fond représentée sur la [Fig.1C].
[Fig.4] La [Fig.4] est une vue partielle en coupe, selon la ligne IV de la [Fig.2], verticalement le long de l'un des pans de la paroi porteuse verticale de la structure porteuse, de l'installation de stockage de gaz liquéfié.
[Fig.5] La [Fig.5] est une vue partielle en coupe, selon la ligne V de la [Fig.2], perpendiculairement à l'une des arêtes de la paroi porteuse verticale de la structure porteuse, de l'installation de stockage de gaz liquéfié.
[Fig.6] La [Fig.6] est une vue partielle en coupe analogue à la [Fig.5], selon la ligne VI de la [Fig.2], montrant une variante de réalisation.
[Fig.7] La [Fig.7] est une vue agrandie d'une partie de la [Fig.2], montrant plus particulièrement la membrane étanche métallique au voisinage de l'intersection entre la paroi de fond de la cuve et des parois verticales de la cuve.
[Fig.8] La [Fig.8] est une vue agrandie du détail VIII de la [Fig.7].
[Fig.9] La [Fig.9] est un schéma représentant une forme polygonale régulière idéale pouvant servir de modèle à la paroi porteuse de fond et la paroi porteuse verticale de la structure porteuse d'une installation de stockage de gaz liquéfié.
[Fig.10] La [Fig.10] est un schéma analogue à la [Fig.9], où, en comparaison avec la [Fig.9], l'on a représenté en outre la forme polygonale réelle de la paroi porteuse de fond et de la paroi porteuse verticale de la structure porteuse d'une installation de stockage de gaz liquéfié, compte tenu des tolérances dimensionnelles de celle-ci.
[Fig.11A] La [Fig.11A] est un diagramme-blocs représentant une première partie d'un procédé de construction de l'installation représentée sur les figures 1A à 8.
[Fig.11B] La [Fig.11B] est un diagramme-blocs représentant une deuxième partie du procédé de construction de la [Fig.11A].
[Fig.11C] La [Fig.11C] est un schéma représentant à titre d'explication une structure étoilée idéale utilisée dans le procédé des figures 11A et 11B.
[Fig.11D] La [Fig.11D] est un schéma analogue à la [Fig.10], montrant schématiquement la position de deux lignes de repère verticales à tracer sur les pans de la paroi porteuse verticale.
[Fig.11E] La [Fig.11E] est un schéma montrant un pan porteur vertical de la paroi porteuse verticale et une façon possible de tracer une ligne de repère verticale sur ce pan porteur vertical.
[Fig.12A] La [Fig.12A] est un schéma analogue à la [Fig.11D], et montrant, ensemble avec la [Fig.12B], une utilisation possible des lignes de repère verticales représentées sur les figures 11D et 11E.
[Fig.12B] La [Fig.12B] est un schéma analogue à la [Fig.11D], montrant schématiquement la position de plusieurs lignes de repère verticales à tracer sur les pans de la paroi porteuse verticale ainsi que de lignes de repère horizontales à tracer sur la paroi porteuse de fond.
[Fig.13A] La [Fig.13A] est un schéma montrant, ensemble avec la [Fig.13B], une utilisation possible des lignes de repère verticales représentées sur les figures 11D, 11E, 12A et 12B.
[Fig.13B] La [Fig.13B] est un schéma montrant, ensemble avec la [Fig.13A], une utilisation possible des lignes de repère verticales représentées sur les figures 11D, 11E, 12A et 12B.
[Fig.14] La [Fig.14] est un schéma représentant des mesures en trois dimensions obtenues lors de la mise en œuvre du procédé des figures 11A et 11B et un plan d'interpolation calculé à partir de ces mesures.
[Fig.15] La [Fig.15] est un schéma représentant la structure étoilée idéale de la [Fig.11C], utilisable dans une variante d'exécution du procédé des figures 11A et 11B.
[Fig.16] La [Fig.16] est un schéma représentant la structure étoilée idéale de la [Fig.15] positionnée par rapport au plan d'interpolation de la [Fig.14] dans une variante d'exécution du procédé des figures 11A et 11B.

### Description des modes de réalisation

Comme on l'a mentionné ci-dessus, l'invention s'intéresse à la réalisation d'une installation de stockage de gaz liquéfié, qui porte la référence 1 dans la description qui va suivre. L'installation 1 est apte à stocker un gaz liquéfié, en particulier du gaz naturel liquéfié (GNL) à une température d'environ -162°C et à pression atmosphérique ou d'autres gaz liquéfiés.

L'installation 1 comporte principalement une structure porteuse 10 et une cuve étanche et thermiquement isolante 20 installée dans l'espace interne de la structure porteuse 10.

On décrit tout d'abord la structure porteuse 10. La structure porteuse 10 comprend une paroi porteuse de fond 11 et une paroi porteuse verticale 12.

L'installation 1 peut être prévue pour être située à terre. La paroi porteuse de fond 11 est alors typiquement horizontale, c'est-à-dire située dans un plan perpendiculaire à la direction de l'accélération de pesanteur aux tolérances dimensionnelles près. La paroi porteuse de fond 11 peut être située au niveau du sol ou éventuellement sous le niveau du sol. La structure porteuse 10 est par exemple réalisée en béton.

En alternative, l'installation 1 peut être prévue pour être installée à bord d'une structure flottante, telle qu'un navire. Dans ce cas, la structure porteuse 10 est une portion d'une double coque que présente la structure flottante. La paroi porteuse 11 peut éventuellement être non horizontale, et même être située dans un plan parallèle à la direction de l'accélération de pesanteur aux tolérances dimensionnelles près lorsque la structure flottante est au repos.

Dans la suite, on considère plus particulièrement le cas d'une installation 1 située à terre et où la paroi porteuse de fond 11 est horizontale. Il est néanmoins précisé que la description qui suit s'applique à une orientation quelconque de la paroi porteuse de fond 11 par rapport à la direction de l'accélération de pesanteur.

Le contour de la paroi porteuse de fond 11 est prévu pour avoir la forme d'un polygone régulier à N côtés, où N est un entier supérieur ou égal à 3. De préférence, N est pair. Une installation 1 où N est égal à 8 ou 56 est plus particulièrement intéressante.

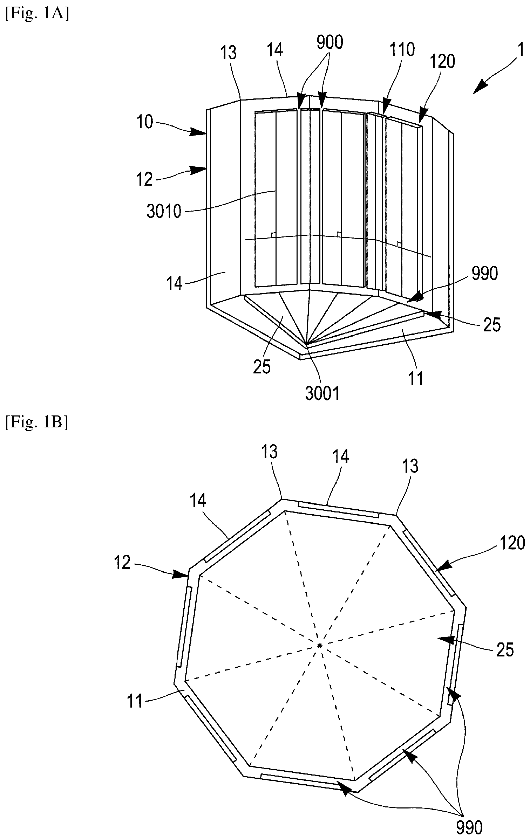

Outre la paroi porteuse de fond 11, la structure porteuse 10 comprend une paroi porteuse verticale 12. Comme cela est mieux visible sur la [Fig.1A], cette paroi porteuse verticale 12 forme une surface cylindrique polygonale, ayant le polygone formé par le contour polygonal de la paroi porteuse de fond 11 comme directrice. La paroi porteuse verticale 12 s'étend dans une direction verticale, c'est-à-dire dans une direction perpendiculaire au plan de la paroi porteuse de fond 11 aux tolérances dimensionnelles près.

En se référant aux figures 1A et 1B, la paroi porteuse verticale 12 est composée de N pans porteurs verticaux 14. À chacun des N côtés du contour polygonal de la paroi porteuse de fond 11 correspond une intersection de la paroi porteuse de fond 11 avec l'un des pans porteurs verticaux 14. Les pans porteurs verticaux 14 sont séparés les uns des autres par des arêtes 13, chaque arête 13 correspondant à un sommet du contour polygonal de la paroi porteuse de fond 11.

De façon non représentée sur les dessins, à l'extrémité de la paroi porteuse verticale 12 opposée à la paroi porteuse de fond 11, la structure porteuse 10 comprend une paroi porteuse de couvercle fermant l'espace interne délimité par la paroi porteuse de fond 11 et la paroi porteuse verticale 12. Cette paroi porteuse de couvercle peut supporter divers équipements utilisables pour acheminer du gaz liquéfié depuis ou vers cet espace interne.

On décrit maintenant un mode de réalisation d'une cuve étanche et thermiquement isolante 20 pouvant être installée dans l'espace interne de la structure porteuse 10 en se référant aux figures 1A à 8. La cuve 20 comporte une paroi de fond 21 disposée sur la paroi porteuse de fond 11, et une paroi verticale 22 disposée sur la paroi porteuse verticale 12.

La paroi de fond 21 et la paroi verticale 22 comportent, en allant depuis la structure porteuse vers l'espace intérieur de la cuve 20, une barrière thermiquement isolante secondaire, une membrane étanche secondaire, une barrière thermiquement isolante primaire, et une membrane étanche primaire destinée à être en contact avec le gaz liquéfié contenu dans la cuve 20. La paroi de fond 21 et la paroi verticale 22 peuvent être réalisées à l'aide d'éléments modulaires. Dans le mode de réalisation décrit ici, ces éléments modulaires correspondent à la technologie GST^{®} commercialisée par la déposante, par exemple. On pourra aussi se référer au document US 6,035,795 pour la description de certains éléments modulaires.

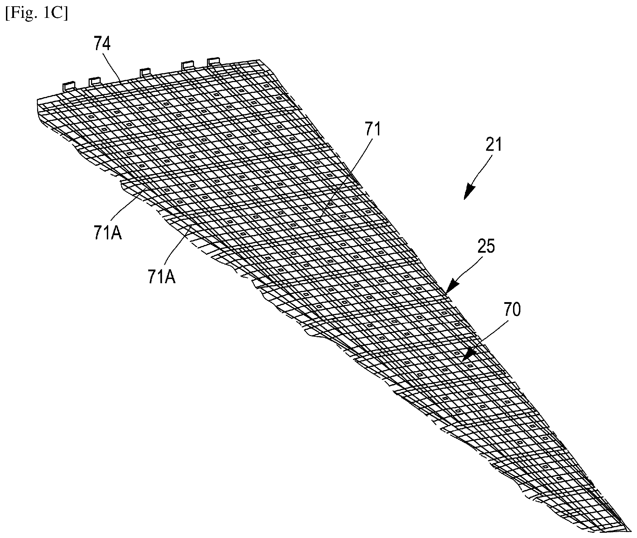

La [Fig.1C] montre, en perspective depuis l'intérieur de l'installation 1, une partie de la paroi de fond 21 correspondant à un secteur angulaire 25. La paroi de fond 21 comporte une pluralité de secteurs angulaires 25. Les secteurs 25 sont images les uns des autres par rotation autour d'un axe vertical, c'est-à-dire autour d'un axe s'étendant parallèlement aux pans 14. Cet axe vertical passe par un point situé au voisinage du centre géométrique de la paroi porteuse de fond 11. Plus précisément, les secteurs 25 sont images les uns des autres par rotation d'un angle égal à k.360°/N, où k est un nombre entier positif. Grâce à cette structure exactement répétée, les mêmes pièces peuvent être utilisées pour construire chaque secteur angulaire 25.

Dans l'exemple représenté sur les figures 1C à 8, on a N = 56 et k = 2. Un seul secteur 25 est représenté sur la [Fig.1C] afin de ne pas surcharger le dessin.

La membrane étanche primaire 70 de la paroi de fond 21 est principalement constituée de tôles 71 rectangulaires juxtaposées. Les bords des tôles 71 sont par exemple ancrés par soudure sur des plots d'ancrage métallique que présentent des blocs thermiquement isolants 41 constituant la barrière thermiquement isolante primaire.

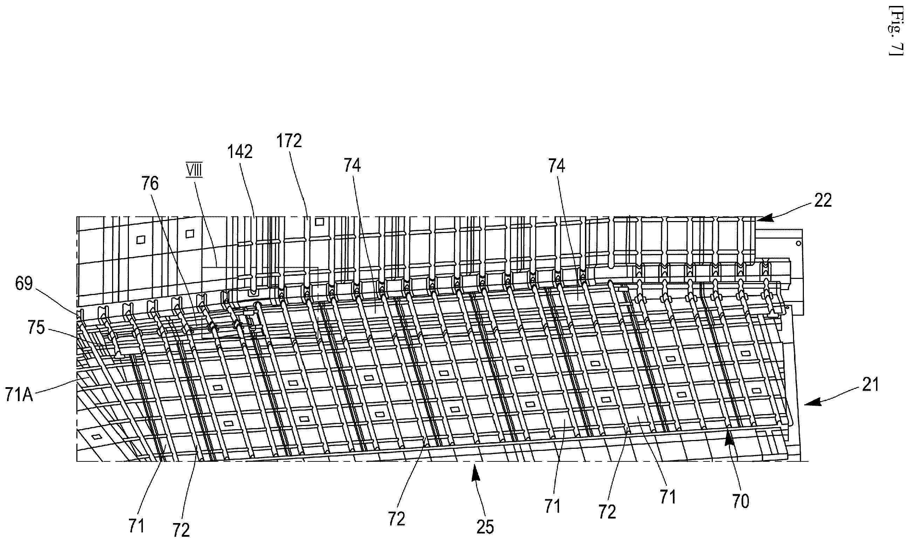

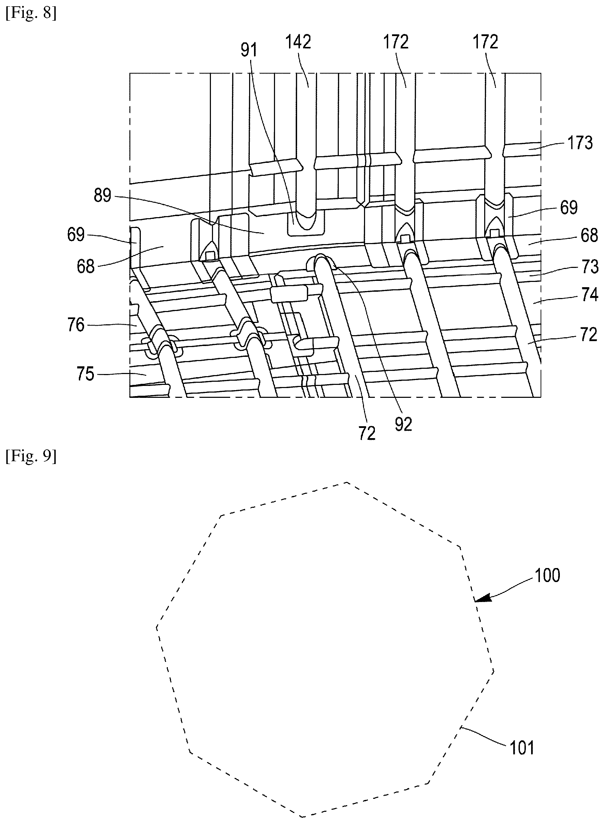

Sur les bords latéraux des secteurs 25, la membrane 70 comporte en outre des tôles de liaison 71A. Les tôles de liaison 71A sont de forme générale triangulaire et relient entre eux deux secteurs 25 voisins, permettant ainsi de compléter la membrane étanche primaire 70. À l'extrémité radialement extérieure des secteurs 25 et au voisinage du ou des pans porteurs verticaux 14 correspondant au secteur 25, la membrane étanche primaire 70 comporte en outre des pièces d'extrémité 74, 75 et des pièces de jonction 76 qui seront décrites plus loin en rapport avec les figures 7 et 8.

Les tôles 71 et 71A ainsi que les pièces d'extrémité 74, 75 et les pièces de jonction 76 peuvent être réalisées en acier inoxydable, par exemple.

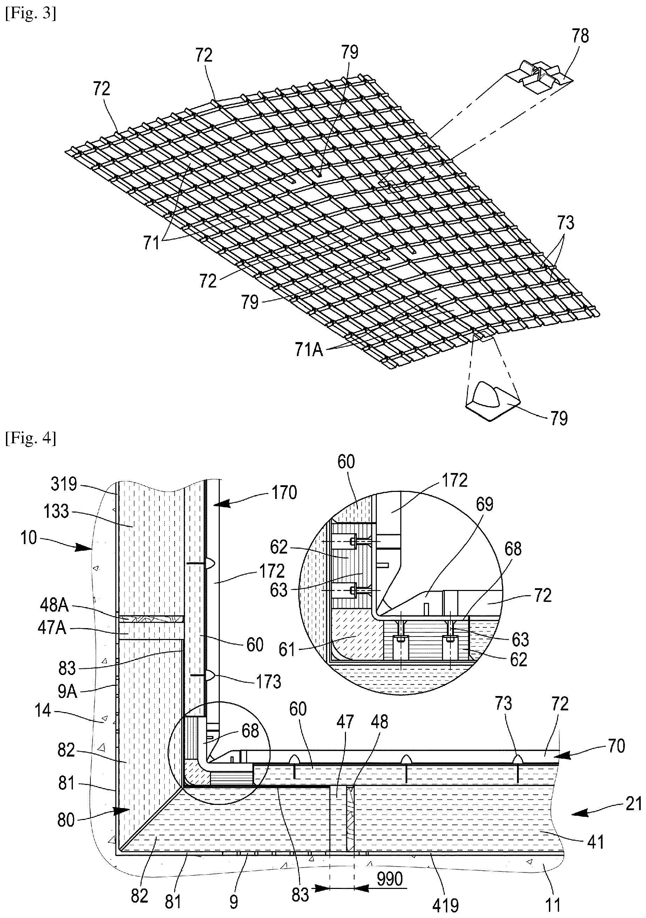

La membrane étanche primaire 70 est ondulée, afin de permettre à celle-ci de résister aux phénomènes de contraction thermique dus au contact avec le gaz liquéfié. Plus précisément, la membrane étanche primaire 70 présente au moins des ondulations 72 qui sont rayonnantes, c'est-à-dire qui sont parallèles entre elles et s'étendent depuis le centre de la cuve 20 vers les pans 14 dans une direction perpendiculaire à ses pans 14. En outre, la membrane étanche primaire 70 présente typiquement des ondulations transverses 73 qui sont perpendiculaires aux ondulations rayonnantes 72. Comme représenté sur les figures et en particulier sur la [Fig.3], les tôles 71, 71A présentent chacune des portions d'ondulations qui, lorsque les tôles 71 et 71A sont juxtaposées, constituent ensemble les ondulations 72, 73.

On a également représenté sur la [Fig.3] des capuchons 79 qui permettent de terminer les ondulations rayonnantes 71 qui ne s'étendent pas jusqu'au centre de la cuve 20. Le détail agrandi 78 montre un nœud situé à l'intersection d'une ondulation transverse 73 et d'une ondulation rayonnante 72.

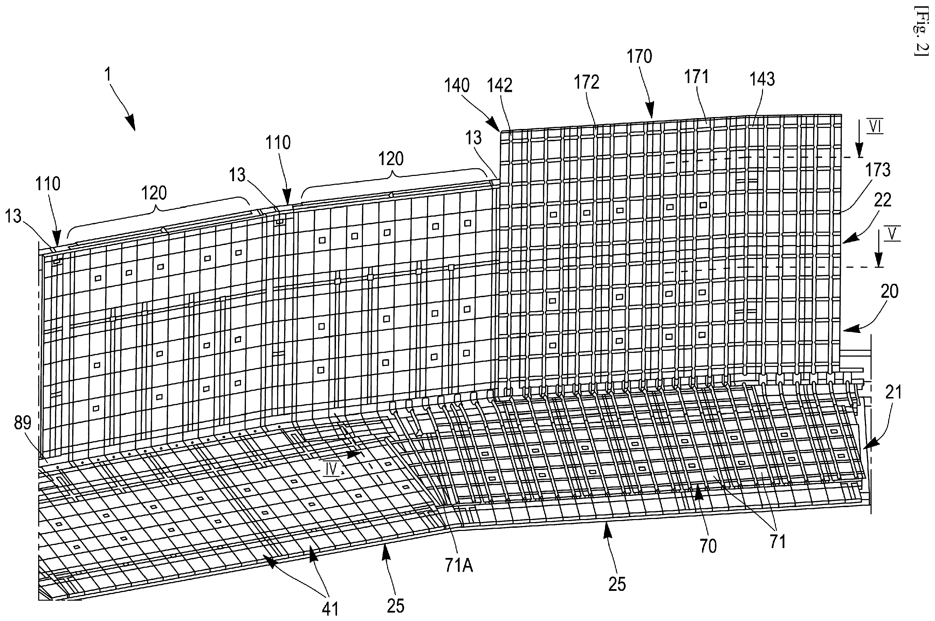

La [Fig.2] montre, en perspective depuis l'intérieur de l'installation 1, l'extrémité radialement extérieure du secteur 25 représenté sur la [Fig.1C] ainsi que des portions de la paroi verticale 22 de la cuve 20. Sur la [Fig.2], les pans verticaux 14 de la paroi porteuse verticale 12 ne sont pas représentés mais les repères 13 indiquent approximativement la position des arêtes de la paroi porteuse verticale 12. En outre, comme sur la [Fig.1C], la paroi porteuse de fond 11 n'est pas représentée.

La paroi verticale 22 de la cuve 20 est disposée sur la paroi porteuse verticale 12 (non représentée sur la [Fig.2]). La paroi verticale 22 comprend, sur chaque pan porteur vertical 14, une rangée verticale 120 de modules de paroi isolants plans, et, le long de chaque arête 13, une rangée verticale 110 de modules de paroi isolants de coin.

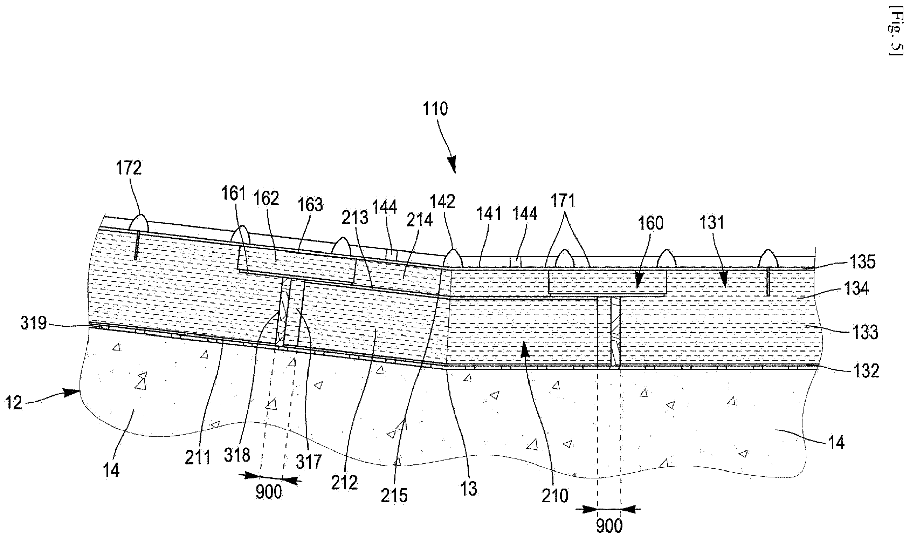

Chaque rangée 120 comprend des blocs thermiquement isolants plans 131 juxtaposés, qui sont mieux visibles sur la [Fig.5]. Les blocs 131 peuvent présenter une plaque de fond 132, un premier bloc de mousse 133 disposé sur la plaque de fond 132, un deuxième bloc de mousse 134 disposé sur le premier bloc de mousse 133, et une plaque de couvercle 135 disposée sur le deuxième bloc de mousse 134. La plaque de fond 132 et la plaque de couvercle 135 peuvent être réalisées en bois contreplaqué. Le bloc de mousse 132 et/ou le bloc de mousse 133 peuvent être réalisés en mousse de polyuréthane, éventuellement renforcée de fibres.

Les blocs 131 peuvent être de mêmes dimensions que, voire même être identiques, aux blocs thermiquement isolants 41 constituant la barrière thermiquement isolante de la paroi de fond 21 de la cuve, afin de limiter le nombre de types d'éléments à employer pour réaliser la barrière thermiquement isolante.

Chaque rangée 120 comprend aussi une membrane métallique étanche 170 destinée à être en contact avec le gaz liquéfié. Une partie de la membrane métallique étanche 170 est visible à droite de la [Fig.2]. La membrane métallique étanche 170 est ondulée, afin de permettre à celle-ci de résister aux phénomènes de contraction thermique dus au contact avec le gaz liquéfié. Plus précisément, la membrane métallique étanche 170 présente des ondulations 172 qui sont verticales, c'est-à-dire qui s'étendent perpendiculairement à la paroi porteuse de fond 11, parallèlement aux pans porteurs verticaux 14.

En outre, la membrane métallique étanche 170 présente typiquement des ondulations transverses 173 qui sont perpendiculaires aux ondulations verticales 172 et font tout le tour de la cuve 20.

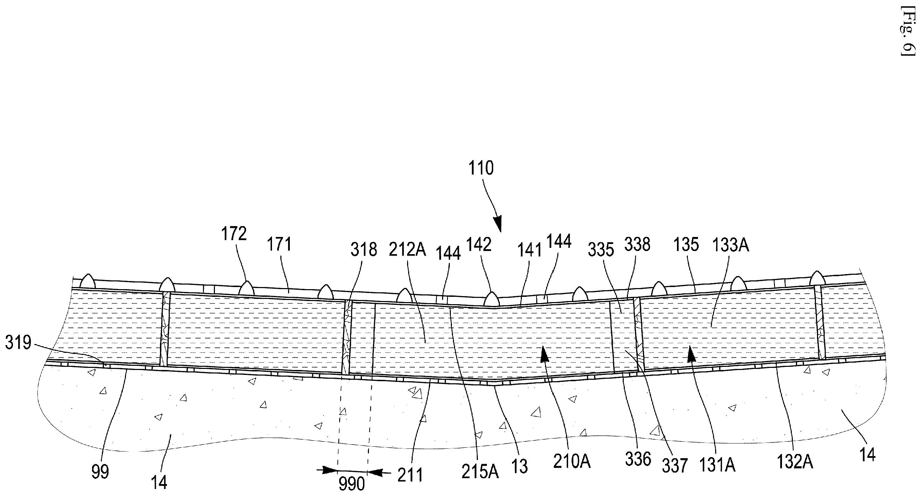

La membrane métallique étanche 170 est réalisée par juxtaposition de tôles métalliques 171 (aussi visibles sur les figures 5 et 6). Ces tôles métalliques 171 présentent chacune des portions d'ondulations qui, lorsque les tôles 171 sont juxtaposées, constituent ensemble les ondulations 172, 173.

Il est à noter que les blocs 131 peuvent également présenter, entre le bloc de mousse 132 et le bloc de mousse 133, une bande de matériau souple constituant une membrane étanche secondaire sous la membrane métallique étanche 170. Par exemple, ce matériau souple peut être un composite tricouche de fibres de verre, d'aluminium et de fibres de verre.

Chaque rangée 110 comprend des blocs thermiquement isolants de coin 210 juxtaposés le long de l'arête 13 correspondante. Ceux-ci sont mieux visibles sur la [Fig.5], qui est une vue partielle en coupe de la paroi verticale 22 et de la structure porteuse 10 au voisinage d'une arête 13.

Les blocs 210 peuvent présenter une plaque de fond 211, un premier bloc de mousse 212 disposé sur la plaque de fond 211, une plaque intermédiaire 213 disposée sur le premier bloc de mousse 212, un deuxième bloc de mousse 214 disposé sur la plaque intermédiaire 213, et une plaque de couvercle 215 disposée sur le deuxième bloc de mousse 214. La plaque de fond 211, la plaque intermédiaire 213 et la plaque de couvercle 215 peuvent être réalisées en bois contreplaqué. Le bloc de mousse 212 et/ou le bloc de mousse 215 peuvent être réalisés en mousse de polyuréthane, éventuellement renforcée de fibres.

Comme représenté sur la [Fig.5], les blocs 210 présentent un dièdre correspondant à l'angle formé par deux pans porteurs verticaux 14 adjacents au niveau de l'arête 13, de sorte que les blocs 210 prennent appui sur ces deux pans porteurs verticaux 14 adjacents.

En se référant aux figures 2 et 5, chaque rangée 110 comporte également une membrane métallique étanche 140 destinée à être en contact avec le gaz liquéfié. La membrane métallique étanche 140 est ondulée, afin de permettre à celle-ci de résister aux phénomènes de contraction thermique dus au contact avec le gaz liquéfié. Plus précisément, la membrane métallique étanche 140 présente une ondulation 142 qui est verticale, c'est-à-dire qui s'étend perpendiculairement à la paroi porteuse de fond 11, parallèlement aux pans porteurs verticaux 14. L'ondulation 142 s'étend le long de la rangée 110, au droit de l'arête 13 correspondant à la rangée 110.

En outre, la membrane métallique étanche 140 présente typiquement des ondulations transverses 143 qui sont perpendiculaires aux ondulations verticales 142.

La membrane métallique étanche 140 est réalisée par juxtaposition de tôles métalliques 141 (aussi visibles sur les figures 5 et 6). Ces tôles métalliques 141 présentent chacune des portions d'ondulations qui, lorsque les tôles 141 sont juxtaposées, constituent ensemble les ondulations 142, 143.

Les tôles 171 et les tôles 141 présentent des bordures jogglinées 144 permettant de fixer les tôles 171 et 141 les unes aux autres par soudure par recouvrement, de façon à former une membrane étanche sur toute la surface de la paroi verticale 22.

Il est à noter que les blocs 210 peuvent également présenter, sur la plaque intermédiaire 213, une bande de matériau souple analogue à celle mentionnée ci-dessus pour les blocs 131, de façon à prolonger la membrane étanche secondaire jusque sous la membrane métallique étanche 140.

En outre, des blocs de raccord 160 sont disposés de part et d'autre des blocs 210, de façon à occuper l'espace entre les blocs de mousse 134 et 214. Les blocs de raccord ont une forme parallélépipédique et peuvent comprendre une plaque de fond 161, un bloc de mousse 162 disposé sur la plaque de fond 161, et une plaque de couvercle 163 disposée sur le bloc de mousse 162. Les plaques 161 et 163 peuvent être réalisées en bois contreplaqué. Le bloc de mousse 162 peut être réalisé en mousse de polyuréthane, éventuellement renforcée de fibres.

En outre, entre les blocs de mousse 212 et 133 et sous les blocs de raccord 160, sont disposés des bouchons 317 réalisés en un matériau thermiquement isolant, par exemple en mousse de polyuréthane, éventuellement renforcée de fibres, et des bandes 318 aussi réalisées en un matériau thermiquement isolant, par exemple en laine de verre. Les bouchons 317 sont situés plus près des blocs 210 que les bandes 318.

Il est à noter que des cordons de mastic 319, lesquels sont parallèles les uns aux autres, et des cales (non représentées) sont interposés entre les blocs 131 et 210 et la surface des pans porteurs verticaux 14, de façon à rattraper les éventuels défauts de planéité des pans porteurs verticaux 14. Il est en outre à noter qu'un revêtement 99 (cf. [Fig.6]), par exemple en polymère, peut être appliqué à la surface des pans porteurs verticaux 14 tournée vers l'intérieur de la cuve 20. Dans ce cas, les cales et les cordons de mastic 319 sont disposés sur ce revêtement 99. Dans l'exemple représenté, les cordons de mastic 319 s'étendent dans la direction verticale de la paroi porteuse verticale 12. En variante, dans un mode de réalisation non représenté, les cordons de mastic 319 peuvent s'étendre perpendiculairement à cette direction verticale.

La [Fig.6] est une vue analogue à la [Fig.5] montrant une variante de réalisation. Sur cette figure, les éléments identiques à ceux de la [Fig.5] portent les mêmes numéros de référence et ne sont pas décrits en détail à nouveau.

La variante de réalisation de la [Fig.6] se distingue de celle de la [Fig.5] en cela que les blocs de raccord 160 sont supprimés. En conséquence, les blocs 131A de la rangée 120 ont une forme générale parallélépipédique, avec un bloc de mousse 133A s'étendant depuis une plaque de fond 132A jusqu'à une plaque de couvercle 135A. Les blocs 210A de la rangée 110 comportent quant à eux un bloc de mousse 212A s'étendant depuis la plaque de fond 211 jusqu'à une plaque de couvercle 215A. Les bandes 318 sont disposées entre les blocs 131A et 210A et sous la membrane 170 et s'étendent jusqu'à la membrane 170. Entre les bandes 318 et les blocs 210A, les bouchons 317 sont remplacés par des blocs 335 de petite largeur par rapport à la largeur des blocs 210A et 131A. Les blocs 335 présentent une plaque de fond 336, un bloc de mousse 337 et une plaque de couvercle 338. Les plaques 336 et 338 peuvent être réalisées en bois contreplaqué, et le bloc de mousse 337 peut être réalisé en mousse de polyuréthane, éventuellement renforcée de fibres.

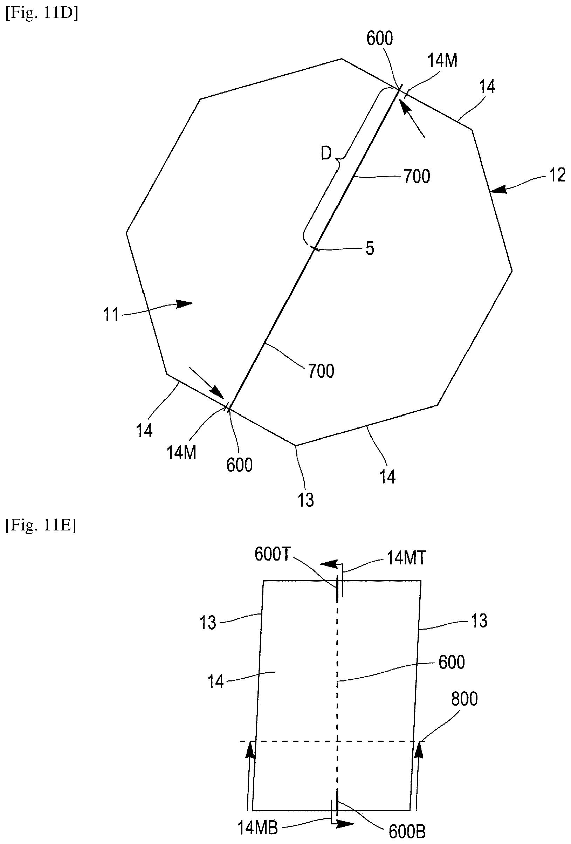

Il est possible de prévoir que toute la paroi verticale 22 soit réalisée conformément à la variante de réalisation de la [Fig.5] ou conformément à la variante de réalisation de la [Fig.6]. Toutefois, en variante, la paroi verticale 22 peut être réalisée conformément à la variante de réalisation de la [Fig.5] depuis la paroi porteuse de fond 11 jusqu'à une hauteur 800 déterminée à l'avance (cf. [Fig.11E] décrite plus loin), et réalisée conformément à la variante de réalisation de la [Fig.6] à partir de cette hauteur 800 déterminée à l'avance.

On va maintenant décrire, en se référant à la [Fig.4], la structure de la paroi de fond 21 et de la paroi verticale 22 de la cuve 20 au voisinage de la jonction entre la paroi porteuse de fond 11 et de la paroi porteuse verticale 12.

Comme représenté sur cette figure, au voisinage de la jonction entre la paroi porteuse de fond 11 et de la paroi porteuse verticale 12, la paroi de la cuve 20 présente une structure d'angle comportant un bloc d'angle 80. Ce bloc d'angle 80 comporte deux paires de plaques 81, 83, par exemple en bois contreplaqué, entre lesquelles sont collés deux blocs de mousse thermiquement isolante 82. L'épaisseur du bloc d'angle 80 est de préférence égale à l'épaisseur du bloc de mousse 133 des blocs 131. Des cordons de mastic 9, 9A parallèles les uns aux autres et des cales (non représentées) sont disposés entre le bloc d'angle 80 et, respectivement, la paroi porteuse de fond 11 et le pan 14 de la paroi porteuse verticale 12.

Entre le bloc d'angle 80 et les membranes 70, 170, deux plaques en bois 62 portent une cornière 68, la cornière 68 étant fixée aux plaques 62, par exemple à l'aide de vis 63. Un bloc thermiquement isolant 61 occupe l'espace restant entre les plaques 62 et le bloc d'angle 80. Deux blocs supplémentaires de raccord 60, qui peuvent être de structure identique aux blocs 160, occupent l'espace restant sous les membranes 70, 170 entre les plaques 62 et les blocs de mousse 134 et les blocs 41 de la paroi de fond 21 de la cuve 20.

On précise ici que les blocs 41 peuvent éventuellement être identiques aux blocs 131, de façon à limiter le nombre de types d'éléments à utiliser pour réaliser la cuve 20. Des cordons de mastic 419, lesquels sont parallèles les uns aux autres et dont un seul est visible sur la [Fig.4], et des cales (non représentées) sont interposés entre les blocs 41 et la paroi porteuse de fond 11 afin de rattraper les éventuels défauts de planéité de la paroi porteuse de fond 11.

Un bouchon 47 analogue aux bouchons 317 et une bande 48 analogue aux bandes 318 sont disposés entre le bloc d'angle 80 et le bloc 41 immédiatement adjacent. Un autre bouchon 47A et une autre bande 48A sont disposés entre le bloc d'angle 80 et le bloc 131 immédiatement adjacent.

La cornière 68 est métallique et porte une pièce de jonction d'angle 69. La pièce de jonction d'angle 69 comporte deux manchons, une extrémité de l'ondulation verticale 172 étant reçue dans l'un de ces manchons et une extrémité de l'ondulation rayonnante 72 étant reçue dans l'autre de ces manchons. La pièce de jonction d'angle 69 assure ainsi un raccord continu entre l'ondulation rayonnante 72 et l'ondulation verticale 172 en vis-à-vis.

En se référant aux figures 7 et 8, on décrit maintenant la structure de la membrane 70 au voisinage des blocs d'angle 80. Sur la [Fig.7], qui est un agrandissement d'une partie de la [Fig.2], on a représenté les tôles 71 les plus extérieures du secteur 25 représenté sur les figures 1 et 2. Le secteur 25 correspond ici à un premier pan porteur vertical 14, et à deux moitiés des deux pans porteurs verticaux 14 situés de part et d'autre de ce premier pan porteur vertical 14.

Au droit du premier pan porteur vertical 14, les tôles 71 sont prolongées par des pièces d'extrémité 74. Les pièces d'extrémité 74 sont de forme rectangulaire, et portent des portions d'ondulations situées dans le prolongement des portions d'ondulations des tôles 71, de façon à prolonger les ondulations transversales 73 et de façon à prolonger les ondulations rayonnantes 72 jusqu'aux pièces de jonction d'angle 69 décrites ci-dessus. Ainsi, les ondulations rayonnantes 72 sont prolongées jusqu'au premier pan porteur vertical 14, de façon à être reliées continûment aux ondulations verticales 172 grâce aux pièces de jonction d'angle 69, et de façon à s'étendre perpendiculairement à ce premier pan porteur vertical 14.

Au droit des pans porteurs verticaux situés de part et d'autre du premier pan porteur vertical 14, les tôles 71 sont prolongées par des pièces d'extrémité 75 puis par des pièces de jonction 76. Les pièces d'extrémité 75, comme les pièces d'extrémité 74, sont de forme rectangulaire et portent des portions d'ondulations situées dans le prolongement des portions d'ondulations des tôles 71, de façon à prolonger les ondulations transversales 73 et de façon à prolonger les ondulations rayonnantes 72. Toutefois les pièces d'extrémité 75 ne prolongent pas les ondulations rayonnantes 72 jusqu'aux pans porteurs verticaux, mais jusqu'à des pièces de jonction 76.

Les pièces de jonction 76 sont de forme trapézoïdale et portent aussi des portions d'ondulations. Toutefois les portions d'ondulations des pièces de jonction 76 prolongent les ondulations rayonnantes 72 et prolongent l'ondulation transversale 73 la plus extérieure en faisant subir à celles-ci une déviation les rendant perpendiculaires au pan porteur vertical le plus proche. Ainsi, les ondulations rayonnantes 72 sont prolongées jusqu'aux pans porteurs verticaux situés de part et d'autre du premier pan porteur vertical 14, de façon à être reliées continûment aux ondulations verticales 172 grâce aux pièces de jonction d'angle 69, et de façon à s'étendre perpendiculairement à ces pans porteurs verticaux, mais seulement au niveau des pièces de jonction 76.

La [Fig.8] est une vue agrandie du détail VIII de la [Fig.7] et montre plus particulièrement la membrane au niveau de la jonction entre deux pans porteurs verticaux adjacents et la paroi porteuse de fond 11. Comme cela est visible sur les figures 7 et 8, une ondulation rayonnante 72 est située approximativement dans le prolongement de l'ondulation verticale 142 qui s'étend le long d'une arête 13. Une cornière triédrique 89 est disposée entre l'ondulation rayonnante 72 et l'ondulation 142, et entre deux cornières 68 du type précédemment décrit. Une extrémité de l'ondulation 142 est emmanchée dans un premier capuchon 91 fixé à la cornière triédrique 89. L'extrémité de l'ondulation rayonnante 72 est emmanchée dans un deuxième capuchon 92 fixé à la cornière 89. L'ondulation 142 s'étend ainsi dans le prolongement de l'ondulation rayonnante 72 emmanchée dans le capuchon 92, mais sans être raccordée à l'ondulation rayonnante 72, ce qui permet de tolérer un décalage important entre cette ondulation 142 et cette ondulation rayonnante 72.

Comme on l'a mentionné ci-dessus, le contour de la paroi porteuse de fond 11 est prévu pour avoir la forme d'un polygone régulier. Purement à titre d'explication, on a représenté en pointillés sur la [Fig.9] la forme d'un polygone régulier 100, qui est la forme prévue d'un contour de la paroi porteuse de fond 11. Le polygone régulier 100 est ici un octogone régulier (N = 8) afin de faciliter l'explication qui va suivre, mais on rappelle que le polygone régulier 100 peut avoir un nombre arbitraire N de côtés 101, N étant supérieur ou égal à 3.

Pour mémoire, dans les figures 1C à 8 qui précèdent, on a N = 56. Dans un exemple de réalisation, une cuve 20 où N = 56 peut présenter un rayon intérieur de 22 m pour un volume intérieur d'environ 29.10³ m³. Dans ce cas, une précision de positionnement de 1 mm dans la direction ortho-radiale sur la paroi porteuse verticale 12 correspond à une tolérance de ±0,0013° (4,7 secondes d'arc) sur la valeur théorique de 360°/56 de l'angle entre secteurs 25. Dans un autre exemple de réalisation, une cuve 20 où N = 56 peut présenter un rayon intérieur de 45 m pour un volume intérieur d'environ 22.10⁴ m³ . Dans ce cas, une précision de positionnement de 1 mm dans la direction ortho-radiale sur la paroi porteuse verticale 12 correspond à une tolérance de ±0,00063° (2,3 secondes d'arc) sur la valeur théorique de 360°/56 de l'angle entre secteurs 25.

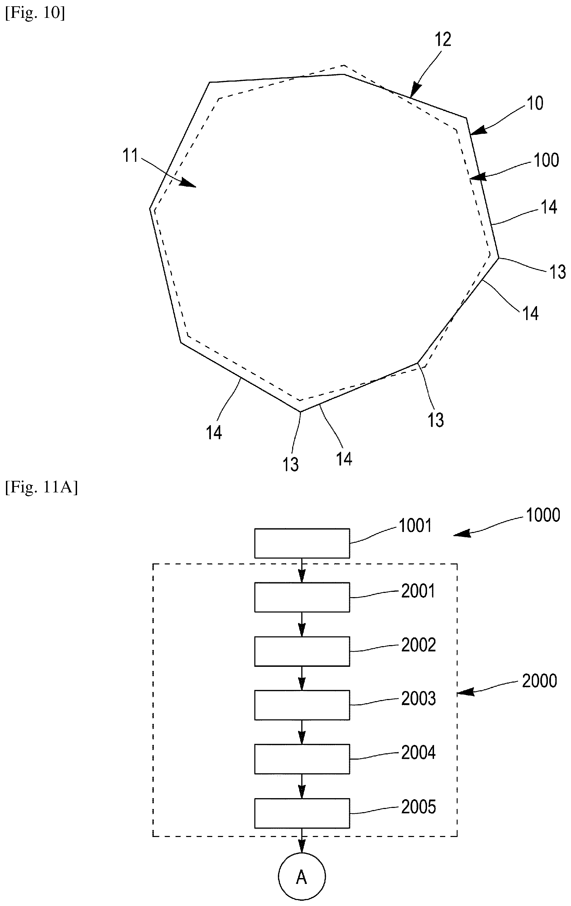

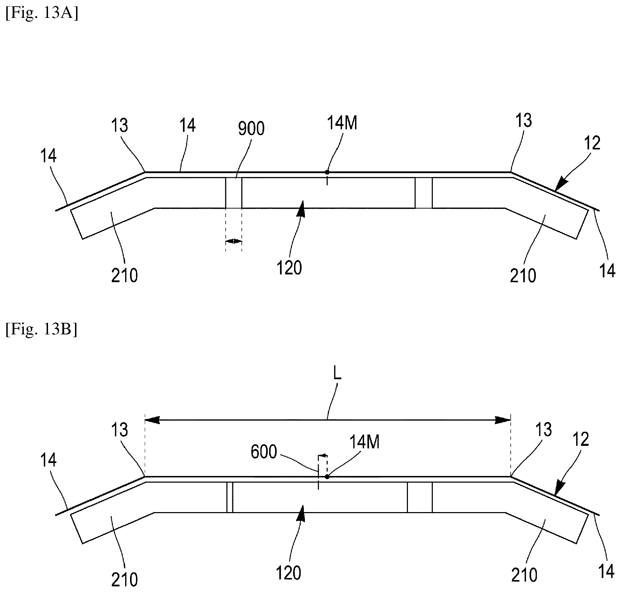

Sur la [Fig.10], on a en outre représenté en trait plein la forme polygonale réelle de la structure porteuse 10. Compte tenu des tolérances dimensionnelles sur une construction en béton, le contour réel de la paroi porteuse de fond 11 présente des déviations dimensionnelles par rapport à sa forme prévue de polygone régulier 100. Il est précisé que sur la [Fig.10], ces déviations dimensionnelles ont été très exagérées afin de faciliter la lisibilité du dessin. À titre d'illustration, pour une structure porteuse 10 en béton servant à la construction d'une cuve 20 où N = 56 et présentant un rayon intérieur de 22 m pour un volume intérieur d'environ 29.10³ m³, les tolérances dimensionnelles portant sur la structure porteuse 10 peuvent être de :
- ±10 mm sur la largeur L (cf. [Fig.13B]) de chaque pan porteur vertical 14 (c'est-à-dire sur la distance la plus courte entre les deux arêtes 13 délimitant ce pan) ;
- ±30 mm sur la hauteur (le long de la direction verticale de la paroi porteuse verticale 12) de chaque pan porteur vertical 14 ;
- ±30 mm sur le rayon intérieur, c'est-à-dire la distance séparant le centre de la paroi porteuse de fond 11 et chaque pan porteur vertical 14 ;
- ±40 mm sur le diamètre intérieur, c'est-à-dire la distance séparant deux pans porteurs verticaux 14 diamétralement opposés.
Or, comme on l'a mentionné ci-dessus, les secteurs 25 sont images les uns des autres par rotation autour d'un axe vertical. Il convient donc de tenir compte des déviations dimensionnelles sur le contour réel de la paroi porteuse de fond 11 pour construire la cuve 20, et tout particulièrement pour assurer le raccordement décrit ci-dessus entre les ondulations rayonnantes 72 et les ondulations verticales 172. La description qui suit propose un procédé de traçage (« marking-out » en anglais) de la structure porteuse 10 qui est utilisable pour ce faire.

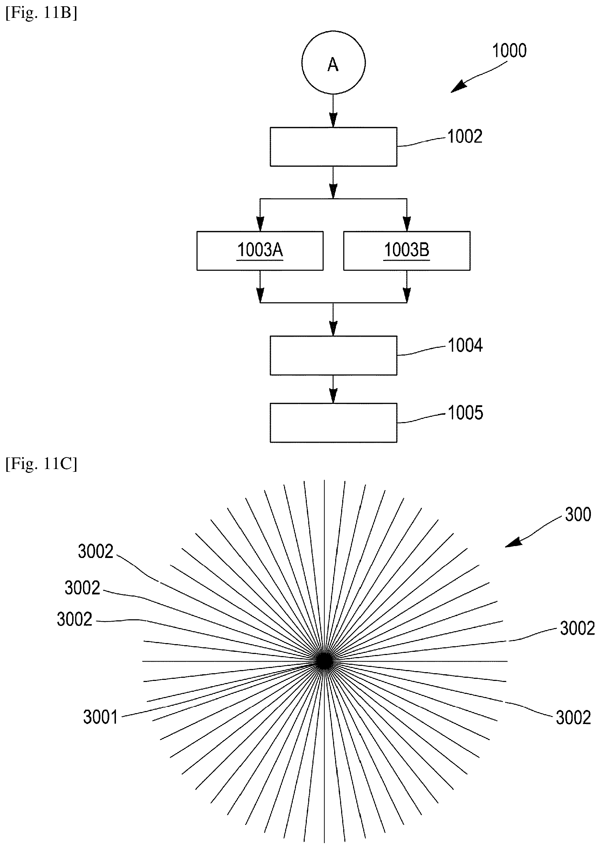

Les figures 11A et 11B sont des diagrammes-blocs représentant les étapes d'un procédé 1000 de construction de l'installation 1. Le procédé de construction 1000 inclut un procédé de traçage 2000 aboutissant au tracé, sur la structure porteuse 10, de lignes de repères permettant au moins de disposer les rangées 120 sur la structure porteuse 10. Les étapes des procédés 1000 et 2000 vont maintenant être détaillées.

Préalablement à la mise en œuvre des procédés 1000 et 2000, on définit tout d'abord une forme idéale du contour de la paroi porteuse de fond 11. Cette forme idéale est simplement la forme du polygone régulier 100. Cette forme découle directement du choix de la valeur de N et de la dimension de l'un des côtés 101 du polygone régulier 100. On définit également la valeur de k, qui est égal au nombre de pans porteurs verticaux 14, divisé par le nombre de secteurs 25 de la paroi de fond 21.

On construit dans une étape 1001 la structure porteuse 10, le fait de construire la structure porteuse 10 comprenant le fait de construire la paroi porteuse de fond 11 et la paroi porteuse verticale 12, le cas échéant munies du revêtement polymérique 99. Comme on l'a mentionné ci-dessus, du fait des tolérances dimensionnelles sur une construction en béton, le contour réel de la paroi porteuse de fond 11 présente, à l'issue de cette étape de construction, des tolérances dimensionnelles par rapport à sa forme prévue de polygone régulier 100. Après l'étape 1001, on commence la mise en œuvre du procédé de traçage 2000. Dans une étape 2001, sur la structure porteuse 10 construite à l'étape 1001, on mesure des positions tridimensionnelles de chacune des N arêtes 13.

Dans un exemple particulier, cette mesure comprend le fait d'effectuer des mesures en trois dimensions de la position de deux points de chaque arête 13. Plus concrètement :
- on choisit une première hauteur par rapport à la paroi porteuse de fond 11,
- on choisit une deuxième hauteur par rapport à la paroi porteuse de fond 11, la deuxième hauteur étant différente de la première hauteur,
- on effectue, pour chacune des deux hauteurs, une mesure en trois dimensions de la position d'un point situé à ladite hauteur sur l'arête 13.
Par « hauteur » on entend une distance perpendiculairement à la paroi porteuse de fond 11. Deux mesures sont ainsi effectuées pour chaque arête 13, soit 2N mesures au total. Les mesures peuvent par exemple être effectuées à l'aide d'un télémètre laser et de cibles pour télémètre laser disposées sur les arêtes à chacune des deux hauteurs, afin de garantir une précision suffisante.

La première hauteur est de préférence choisie de telle sorte que le point correspondant sur chaque arête 13 soit à proximité de la paroi porteuse de fond 11, par exemple à moins de 350 mm de la paroi porteuse de fond 11, plus particulièrement à environ 250 mm de la paroi porteuse de fond 11. La deuxième hauteur est de préférence choisie de telle sorte que le point correspondant sur chaque arête 13 soit à proximité de l'extrémité de l'arête 13 opposée à la paroi porteuse de fond 11, par exemple à proximité d'une extrémité supérieure de la membrane 170 lorsque celle-ci ne s'étend pas jusqu'au sommet des pans porteurs verticaux 14, plus particulièrement à moins de 350 mm ou à environ 250 mm de l'extrémité supérieure de la membrane 170.

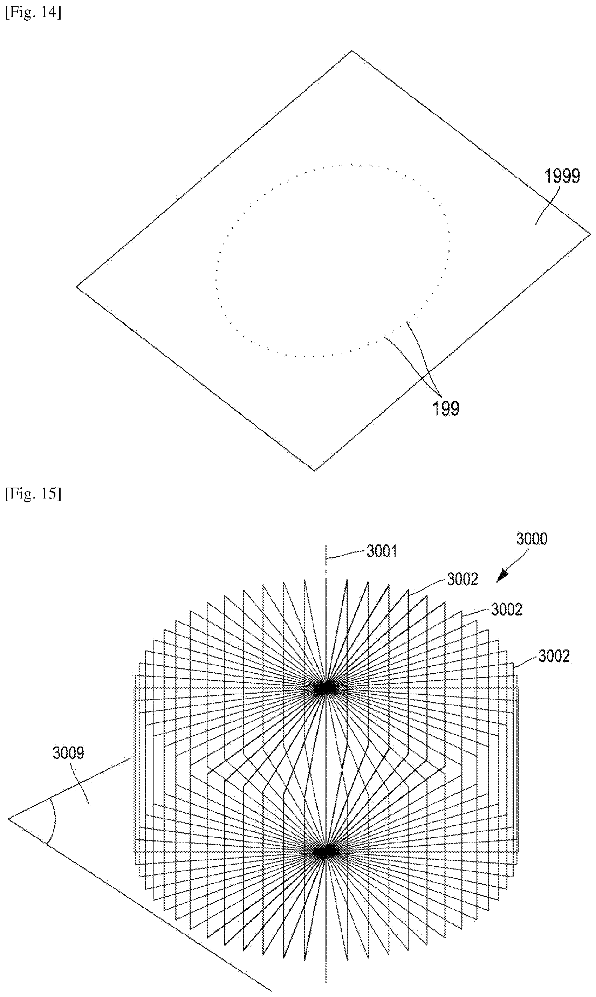

En référence à la [Fig.14], les références 199 désignent les positions en trois dimensions des points situés à la première hauteur sur chacune des arêtes 13. La référence 1999 désigne un plan d'interpolation qui est calculé à partir des positions en trois dimensions 199, par une méthode d'interpolation. Toute méthode d'interpolation connue en tant que telle peut convenir pour le calcul du plan d'interpolation 1999, tant que celle-ci minimise un écart entre les positions en trois dimensions 199 et le plan d'interpolation 1999. On comprend bien que toutes les positions en trois dimensions 199 ne sont donc pas nécessairement sur le plan d'interpolation 1999.

On notera qu'une fois ce plan d'interpolation 1999 calculé, il est possible d'utiliser ce plan d'interpolation 1999 pour effectuer la mesure en trois dimensions des points situés à la deuxième hauteur, en calculant la position d'un plan (non représenté) qui est parallèle au plan d'interpolation 1999 et qui est distant du plan d'interpolation 1999 d'une distance égale à la différence entre la deuxième hauteur et la première hauteur.

Il est à noter qu'en variante, il est possible d'effectuer trois mesures pour trois hauteurs différentes pour chaque arête 13, soit 3N mesures au total, voire un nombre quelconque de mesures à des hauteurs différentes pour chaque arête 13.

Après l'étape 2001, le procédé 2000 passe à une étape 2002 consistant à définir une structure étoilée idéale 3000 par simulation numérique.

La structure étoilée idéale 3000 est représentée sur la [Fig.11C], et se compose d'un axe vertical 3001 et de N demi-plans verticaux 3002. Les N demi-plans verticaux 3002 sont délimités par l'axe vertical 3001, et sont orientés autour de l'axe vertical 3001 dans des directions azimutales mutuellement espacées de 360°/N.

Après l'étape 2002, le procédé 2000 passe à une étape 2003 consistant à déterminer, par simulation numérique, des positions tridimensionnelles de N lignes d'intersection entre les N demi-plans verticaux 3002 et les N pans porteurs verticaux 14 lorsque l'axe vertical 3001 est placé dans l'espace interne de la structure porteuse 10.

Après l'étape 2003, le procédé 2000 passe à une étape 2004 consistant à rechercher, par simulation numérique, une position cible de la structure étoilée idéale 3000.

La position cible de la structure étoilée idéale 3000 est définie par :
- la position d'une intersection de l'axe vertical 3001 avec la paroi porteuse de fond 11 ; et
- une orientation azimutale de la structure étoilée idéale 3000 dans l'espace interne de la structure porteuse 10.

La position cible de la structure étoilée idéale 3000 est calculée de façon à assurer que :
- d'une part, chaque demi-plan 3002 de la structure étoilée idéale 3000 coupe un unique plan porteur vertical 14 de la paroi porteuse verticale 12 au niveau d'une ligne d'intersection 3010 ;
- d'autre part, des distances entre chaque ligne d'intersection 3010 et les deux arêtes verticales 13 délimitant ce plan porteur vertical 14 unique satisfassent des critères dimensionnels prédéterminés.

En revenant momentanément à la [Fig.1A], on comprendra mieux la signification de la position cible de la structure étoilée idéale 3000. Sur cette [Fig.1A], outre la structure porteuse 10, les rangées 110 et 120 et les secteurs 25 déjà décrits, on a aussi représenté les positions des espaces 900 et 990, ainsi que les positions de l'axe vertical 3001 et des lignes d'intersection 3010. Comme on s'en apercevra en considérant la [Fig.11C] ensemble avec la [Fig.1A], modifier la position de l'intersection de l'axe vertical 3001 avec la paroi porteuse de fond 11 et/ou l'orientation azimutale de la structure étoilée idéale 3000 dans l'espace interne de la structure porteuse 10 modifie la position des lignes d'intersection 3010. Si l'on imagine alors que les rangées 110 sont fixes par rapport à la paroi porteuse verticale 12, tandis que les rangées 120 sont mobiles par rapport à la paroi porteuse verticale 12 en suivant les lignes d'intersection 3010, c'est la position des lignes d'intersection 3010 qui détermine la position des rangées 120 sur la paroi porteuse verticale 12. Les espaces 900 (cf. figures 1A, 5 et 6) servent alors à absorber les déviations de la structure porteuse 10 par rapport à sa forme idéale.

Toujours en considérant la [Fig.11C] ensemble avec la [Fig.1A], et en considérant en plus la [Fig.1B], on s'aperçoit également que si l'on imagine que les secteurs 25 convergent sur l'axe vertical 3001 et sont mobiles par rapport à la paroi porteuse de fond 11 en suivant l'axe vertical 3001 et les lignes d'intersection 3010, c'est la position de l'axe vertical 3001 et des lignes d'intersection 3010 qui détermine la position des secteurs 25 sur la paroi porteuse de fond 11. Les espaces 990 (cf. figures 1A, 1B et 4) servent alors à absorber les déviations de la structure porteuse 10 par rapport à sa forme idéale.

Les étapes 2002 à 2004 sont typiquement effectuées par calcul informatique, au moyen d'un ordinateur exécutant un programme d'ordinateur convenable.

L'étape 2004 peut être effectuée en mettant en œuvre un algorithme évolutionnaire. On entend par « algorithme évolutionnaire » (également connu sous le nom d'« algorithme évolutionniste » ; en anglais : « evolutionary algorithm ») une méthode typiquement mise en œuvre par ordinateur, dans laquelle on génère une population de solutions, puis on évalue chaque solution par une fonction objectif, on sélectionne certaines des solutions qui minimisent le mieux la fonction objectif, on génère une nouvelle population de solutions à partir des solutions ainsi sélectionnées, et on répète ces étapes tant qu'un critère d'arrêt n'est pas vérifié. Dans le cadre de l'étape 2004, chaque position possible de la structure étoilée idéale 3000 est une solution, et une fonction de coût dont la valeur dépend du respect de critères dimensionnels prédéterminés sert de fonction objectif à l'algorithme évolutionnaire. Les méthodes d'optimisation utilisant un algorithme évolutionnaire sont bien connues en tant que telles. Dans un mode d'exécution particulier, l'algorithme évolutionnaire est un algorithme d'optimisation par essaims particulaires (en anglais : « particle swarm optimization »).

Dans un exemple particulier, les critères dimensionnels prédéterminés comprennent les critères suivants :
- la largeur de chaque espace 900 est comprise entre une valeur minimale et une valeur maximale ;
- la largeur de chaque espace 990 est comprise entre une valeur minimale et une valeur maximale.

Les critères dimensionnels qui précèdent peuvent être chacun exprimés sous la forme d'une fonction de coût partielle, dont la valeur dépend du respect de ce critère. La fonction de coût utilisée par l'algorithme évolutionnaire peut alors être une somme pondérée de ces fonctions de coût partielles.

Les critères dimensionnels prédéterminés mentionnés ci-dessus peuvent comprendre en outre :
- un critère d'uniformité de la largeur des espaces 900 sur tout le pourtour de la paroi porteuse verticale 12 ; dans ce cas, la fonction de coût partielle associée à ce critère peut être une fonction de l'écart-type (en anglais : « standard deviation ») de la largeur des espaces 900 ; et /ou
- un critère d'uniformité de la largeur des espaces 990 sur tout le contour extérieur de la paroi porteuse de fond 11 ; dans ce cas, la fonction de coût partielle associée à ce critère peut être une fonction de l'écart-type de la largeur des espaces 990.

Après l'étape 2004, le procédé 2000 passe à une étape 2005 consistant à tracer, sur les pans porteurs verticaux 14, des lignes de repère verticales 600 dont les positions correspondent à la position des lignes d'intersection 3010 lorsque la structure étoilée idéale 3000 est dans sa position cible déterminée à l'étape 2004.

Les lignes de repère verticales 600 sont tracées sur les pans porteurs verticaux 14, de préférence avec une précision de positionnement meilleure que 5 mm.

De préférence, cette précision de positionnement est meilleure que 3 mm, 2 mm, 1 mm voire 0,5 mm.

La [Fig.11D] représente, à titre d'explication, la position de deux lignes de repère verticales 600 sur deux pans porteurs verticaux 14 diamétralement opposés. Comme représenté sur cette figure, les lignes de repère verticales 600 peuvent être plus ou moins décalées par rapport aux médianes 14M des pans porteurs verticaux 14.

La [Fig.11E] représente, à titre d'illustration, un pan porteur vertical 14 délimité par deux arêtes 13 et une façon possible de tracer une ligne de repère verticale 600 sur ce pan porteur vertical 14. À partir de la position cible de la structure étoilée idéale 3000 déterminée à l'étape 2004, on peut calculer :
- une distance entre l'extrémité inférieure (c'est-à-dire située du côté de la paroi porteuse de fond 11) 14MB de la médiane 14M et l'extrémité inférieure 600B de la ligne de repère verticale 600 ; et
- une distance entre l'extrémité supérieure (c'est-à-dire opposée à l'extrémité inférieure 14MB) 14MT de la médiane 14M et l'extrémité supérieure 600T de la ligne de repère verticale 600,
puis tracer les positions des extrémités 600B et 600T, et tracer la ligne de repère verticale 600 en joignant les extrémités 600B et 600T. Il est à noter que si la membrane 170 ne s'étend pas jusqu'au sommet des pans porteurs verticaux 14, les points 600T et 14T peuvent être situés à la hauteur où la membrane 170 s'interrompt.

On a également représenté sur la [Fig.11E] que l'on peut aussi tracer à la même occasion la hauteur 800 mentionnée plus haut au-dessus de laquelle la paroi verticale de cuve 22 change de structure.

En outre, pendant l'étape 2005, on peut également tracer la position d'un point de référence 5 situé sur la paroi porteuse de fond 11, la position du point de référence 5 correspondant à la position de l'axe vertical 3001 de la structure étoilée idéale 3000 lorsque celle-ci est à sa position cible déterminée à l'étape 2004. Le point de référence 5 peut être placé grâce à un calcul de la distance D entre l'extrémité inférieure 600B de chaque ligne de repère verticale 600 et ce point de référence 5.

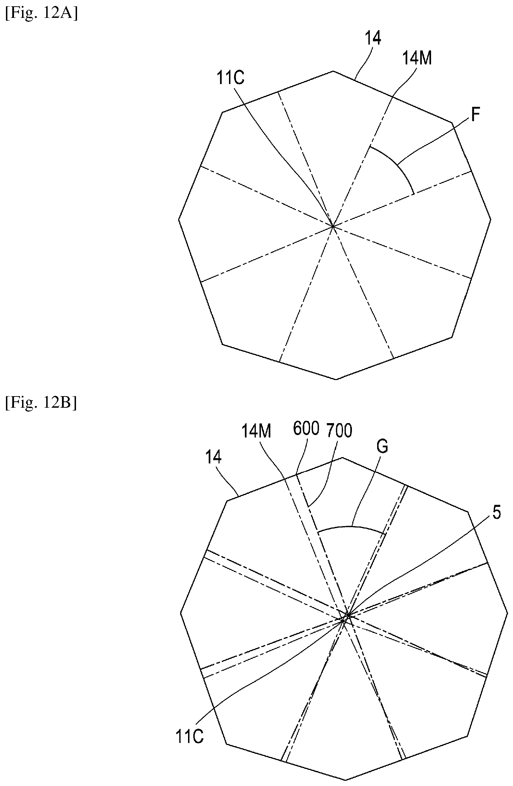

Toujours à titre d'explication, la [Fig.12A] représente la paroi porteuse verticale 12 et les médianes 14M des pans porteurs verticaux 14. Du fait des tolérances dimensionnelles sur la construction de la structure porteuse 10, un angle F entre le prolongement, en direction du centre de construction 11C de la paroi porteuse de fond 11, des médianes 14M de deux pans porteurs verticaux 14 adjacents peut ne pas être égal à k.360°/N.

Toujours à titre d'explication, la [Fig.12B] représente en outre la position d'une ligne de repère verticale 600 sur chacun des pans porteurs verticaux 14. L'étape 2005 peut comprendre en outre le fait de tracer, sur la paroi porteuse de fond 11, le point de référence 5 et des lignes de repère horizontales 700 reliant les lignes de repère verticales 600 au point de référence 5 comme représenté sur la [Fig.12B], c'est-à-dire les intersections des demi-plans 3002 de la structure étoilée idéale 3000 avec la paroi porteuse de fond 11. Naturellement, si N est pair, les lignes de repère horizontales 700 relient les lignes de repère verticales 600 de deux pans porteurs verticaux opposés. Grâce au tracé des lignes de repère verticales 600 et du point de référence 5, il est possible d'obtenir un angle G entre deux lignes de repère horizontales 700 avec une valeur très proche de k.360°/N.

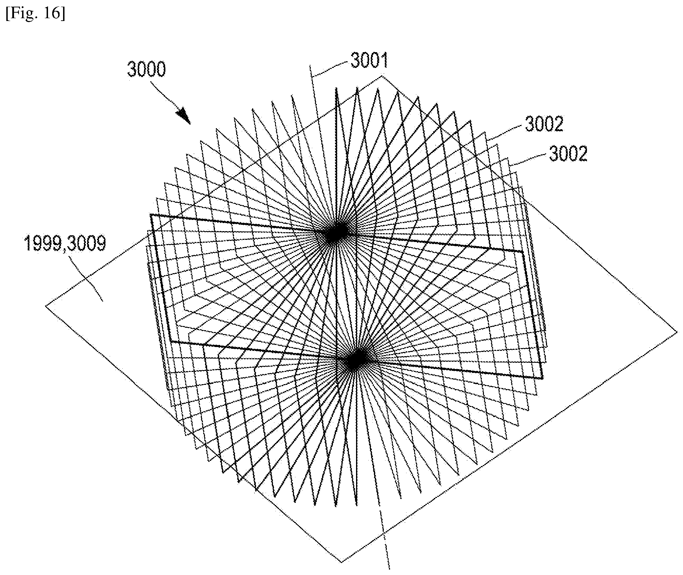

En référence aux figures 15 et 16, on précise une façon possible de tracer la position mentionnée précédemment du point de référence 5 situé sur la paroi porteuse de fond 11.

En référence à la [Fig.15], dans une variante d'exécution, la structure étoilée idéale 3000 se compose non seulement d'un axe vertical 3001 et de N demi-plans verticaux 3002, mais aussi d'un plan horizontal 3009. Le plan horizontal 3009 est perpendiculaire à l'axe vertical 3001 et donc aux demi-plans verticaux 3002.

D'autre part, dans cette variante d'exécution, il est défini un repère orthogonal (non représenté) associé au plan d'interpolation 1999 (cf. [Fig.14]), dont l'un des axes (non représenté) est perpendiculaire au plan d'interpolation 1999.

À partir de la position cible, déterminée à l'étape 2004, de la structure étoilée idéale 3000, on exprime par le calcul la position cible de la structure étoilée idéale 3000 dans le repère orthogonal associé au plan d'interpolation 1999, sous la contrainte que le plan horizontal 3009 est confondu avec le plan d'interpolation 1999, comme représenté sur la [Fig.16]. On comprend que l'axe vertical 3001 est alors nécessairement parallèle à l'axe du repère orthogonal qui est perpendiculaire au plan d'interpolation 1999.

La position de l'axe vertical 3001 dans le repère orthogonal associé au plan de référence 1999 est ainsi déterminée. Il suffit alors de tracer le point de référence 5 sur la paroi porteuse de fond 11 à cette position déterminée de l'axe vertical 3001. Ensuite, on peut tracer les lignes de repère verticales 600, puis les lignes de repère horizontales 700 reliant les lignes de repère verticales 600 au point de référence 5, comme on l'a déjà mentionné ci-dessus.

Après l'étape 2005, on reprend le procédé de construction 1000 de l'installation 1 (repère A sur les figures 11A et 11B).

Dans une étape 1002, on place les blocs 210 des rangées 110 le long des arêtes 13, afin qu'ils soient bien stabilisés sur les deux pans porteurs verticaux 14 bordant chaque arête 13. Les positions des blocs 210 sont donc entièrement tributaires des tolérances de construction de la paroi porteuse verticale 12 et nécessairement déviées d'une position idéale.

Dans une étape 1003A, on dispose les blocs 131 de chaque rangée 120 en tenant compte des positions des lignes de repère verticales 600.

Les figures 13A et 13B représentent, très schématiquement et à titre d'illustration, une utilisation possible des lignes de repère verticales 600 pour positionner les blocs des rangées 110 et 120. Sur ces figures, on a représenté le ou les blocs de la rangée 120 et deux blocs 210 de deux rangées 110 disposées le long de deux arêtes 13 adjacentes.

Sur la [Fig.13A], on a représenté à titre d'illustration que s'il n'y avait aucun écart dimensionnel entre les dimensions théoriques et les dimensions réelles de la structure porteuse 10, on pourrait simplement disposer le centre de la rangée 120 au droit de la médiane 14M du pan porteur vertical 14 correspondant, les espaces 900 étant alors identiques de part et d'autre de la rangée 120.

Sur la [Fig.13B], on a représenté à titre d'explication que l'on peut utiliser la ligne de repère verticale 600 pour positionner le centre de la rangée 120 au droit de la ligne de repère verticale 600, et non au droit de la médiane 14M. Dans une étape 1003B, la largeur de chaque bouchon 317 (cf. [Fig.5]) ou bloc 335 (cf. [Fig.6]) est ajustée in situ, par exemple par découpage, au fil du positionnement des blocs de la rangée 120 en fonction de la largeur de l'espace 900 en cause, et on dispose les bouchons 317 et 335 dans les espaces 900. Les étapes 1003A et 1003B peuvent être effectuées dans n'importe quel ordre souhaité, selon les besoins.

Ensuite, dans une étape 1004, on met en place les tôles 141 de la membrane métallique étanche 140 et les tôles 171 de la membrane métallique étanche 170, et on soude ces tôles entre elles par soudure par recouvrement au niveau de leurs bords respectifs. Les bordures jogglinées 144 permettent d'effectuer un ajustement dimensionnel correspondant à l'ajustement de la largeur des espaces 900.

Dans une étape 1005, on met en place les blocs 41 sur la paroi porteuse de fond 11 en tenant compte des positions des lignes de repère horizontales 700 ; et on place les tôles 71, 71A de la membrane métallique étanche 70 et on soude ces tôles entre elles par soudure par recouvrement au niveau de leurs bords respectifs. La largeur de chaque bouchon 47 (cf. [Fig.4]) peut être ajustée in situ, par exemple par découpage, au fil du positionnement des blocs 41 de chaque secteur 25 en fonction de la largeur de l'espace 990 en cause.

On notera que les étapes 1004 et 1005 peuvent être effectuées dans n'importe quel ordre souhaité voire en même temps, selon les besoins.

Enfin, dans une étape 1006, on met en place les pièces d'extrémité 74 et 75, les pièces de jonction 76, les cornières 68 et 89, les pièces de jonction d'angle 69, et les capuchons 91 et 92, et on soude ensemble ces éléments par recouvrement, de façon à obtenir les raccordements désirés entre les ondulations rayonnantes 72 et les ondulations verticales 142, 172. À l'issue de l'étape 1006, on peut finir la construction de la cuve 20 et donc de l'installation 1.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Procédé de traçage (2000) pour la construction d'une installation de stockage de gaz liquéfié (1), le procédé de traçage (2000) comprenant :
- mesurer (2001) des positions tridimensionnelles de N arêtes verticales dans une structure porteuse (10) présentant un espace interne délimité par une paroi porteuse de fond (11) et une paroi porteuse verticale (12), un contour de ladite paroi porteuse de fond (11) ayant la forme d'un polygone régulier à N côtés présentant des tolérances dimensionnelles, N étant un nombre entier supérieur ou égal à 3,
ladite paroi porteuse verticale (12) étant composée de N pans porteurs verticaux (14) séparés par lesdits N arêtes verticales et formant une surface cylindrique polygonale ayant ledit polygone comme directrice, où chacun des N côtés du polygone correspond à une intersection de la paroi porteuse de fond (11) avec l'un desdits pans porteurs verticaux (14) ;
- tracer des lignes, **caractérisé en ce que** le procédé comprend en outre:
- définir (2002) une structure étoilée idéale (3000) composée d'un axe vertical (3001) et de N demi-plans verticaux (3002) délimités par ledit axe vertical (3001) et orientés autour dudit axe vertical dans des directions azimutales mutuellement espacées de 360°/N ;
- en fonction des positions tridimensionnelles mesurées des N arêtes verticales, déterminer (2003) par simulation numérique des positions tridimensionnelles de N lignes d'intersection entre les N demi-plans verticaux (3002) de la structure étoilée idéale (3000) et les N pans porteurs verticaux (14) de la paroi porteuse verticale (12) lorsque ledit axe vertical (3001) est placé dans l'espace interne de la structure porteuse (10) ;
- rechercher (2004) par simulation numérique une position cible de la structure étoilée idéale (3000), la position cible étant définie par la position d'une intersection de l'axe vertical (3001) avec la paroi porteuse de fond (10) et par une orientation azimutale de la structure étoilée idéale (3000) dans l'espace interne de la structure porteuse (10), dans lequel la position cible assure que chaque demi-plan vertical (3002) de la structure étoilée idéale coupe un unique pan porteur vertical (14) respectif de la paroi porteuse verticale (12) au niveau d'une ligne d'intersection (3010), et que des distances entre chaque ligne d'intersection (3010) et les deux arêtes verticales (13) délimitant ledit unique pan porteur vertical (14) respectif satisfont des critères dimensionnels prédéterminés ;
- tracer (2005) les lignes d'intersection correspondant à la position cible de la structure étoilée idéale (3000) sur les N pans porteurs verticaux (14) de préférence avec une précision meilleure que 5 mm dans une direction ortho-radiale.

2. Procédé de traçage (2000) selon la revendication 1, dans lequel mesurer (2001) les positions tridimensionnelles des N arêtes verticales comprend :
- obtenir N premières mesures de position tridimensionnelle (199), chaque première mesure de position tridimensionnelle (199) étant une mesure en trois dimensions de la position d'un point situé, à une première hauteur par rapport à la paroi porteuse de fond (11), sur une des N arêtes (13) de la paroi porteuse verticale (12) ;
- obtenir N deuxièmes mesures de position tridimensionnelle, chaque deuxième mesure de position tridimensionnelle étant une mesure en trois dimensions de la position d'un point situé, à une deuxième hauteur par rapport à la paroi porteuse de fond (11), sur une des N arêtes (13) de la paroi porteuse verticale (12).

3. Procédé de traçage (2000) selon la revendication 2, lequel comprend en outre calculer, par une méthode d'interpolation, la position d'un plan d'interpolation (1999) à partir des N premières mesures de position tridimensionnelle (199).

4. Procédé de traçage (2000) selon la revendication 3, dans lequel les N deuxièmes mesures de position tridimensionnelle sont effectuées au niveau d'un deuxième plan qui est parallèle au plan d'interpolation (1999) et distant du plan d'interpolation (1999) d'une distance égale à la différence entre la deuxième hauteur et la première hauteur.

5. Procédé de traçage (2000) selon l'une quelconque des revendications 1 à 4, dans laquelle la structure étoilée idéale (3000) est composée d'un axe vertical (3001), de N demi-plans verticaux (3002) délimités par ledit axe vertical (3001) et orientés autour dudit axe vertical dans des directions azimutales mutuellement espacées de 360°/N, et d'un plan horizontal (3009), le plan horizontal (3009) étant perpendiculaire à l'axe vertical (3001).

6. Procédé de traçage (2000) selon l'une quelconque des revendications 1 à 5, lequel comprend en outre :
tracer (2005), sur la paroi porteuse de fond (11), un point de référence (5) correspondant à ladite position de l'intersection de l'axe vertical (3001) avec la paroi porteuse de fond (10).

7. Procédé de traçage (2000) selon la revendication 6 en combinaison avec la revendication 5 et l'une de la revendication 3 et de la revendication 4, dans lequel ladite position de l'intersection de l'axe vertical (3001) avec la paroi porteuse de fond (10) est déterminée en exprimant par le calcul la position cible de la structure étoilée idéale (3000) dans un repère orthogonal associé au plan d'interpolation (1999), sous la contrainte que le plan horizontal (3009) est confondu avec le plan d'interpolation (1999), l'un des axes dudit repère orthogonal étant perpendiculaire au plan d'interpolation (1999).

8. Procédé de traçage (2000) selon la revendication 7, lequel comprend en outre :
tracer (2005), sur la paroi porteuse de fond (11), des deuxièmes lignes d'intersection (700) entre les N demi-plans verticaux (3002) de la structure étoilée idéale (3000) et la paroi porteuse de fond de préférence avec une précision meilleure que 5 mm dans une direction ortho-radiale.

9. Procédé de traçage (2000) selon l'une quelconque des revendications 1 à 8, dans lequel la recherche (2004) par simulation numérique d'une position cible de la structure étoilée idéale (3000) est effectuée à l'aide d'un algorithme évolutionnaire, l'algorithme évolutionnaire utilisant comme fonction objectif une fonction de coût dont la valeur est fonction du respect des critères dimensionnels prédéterminés.

10. Procédé de traçage (2000) selon l'une quelconque des revendications 1 à 9, dans lequel l'installation de stockage de gaz liquéfié (1) est destinée à comprendre une cuve étanche et thermiquement isolante (20) installée dans l'espace interne de la structure porteuse (10), la cuve (20) comportant une paroi de fond (21) disposée sur la paroi porteuse de fond (11) et une paroi verticale (22) disposée sur la paroi porteuse verticale (12),
ladite paroi de fond (21) comportant une pluralité de secteurs angulaires (25) images les uns des autres par une rotation d'un angle prédéterminé autour d'un axe vertical, l'angle prédéterminé étant égal à k.360°/N, où k est un nombre entier positif,
ladite paroi verticale (22) comprenant une rangée verticale (110) de modules de paroi de coin (210, 210A, 141) disposée le long de chaque arête (13) de la paroi porteuse verticale (12) séparant deux pans porteurs verticaux (14) adjacents et une rangée verticale (120) de modules de paroi plans (131 ; 131A) disposée sur chaque pan porteur vertical (14), des espaces de réglage verticaux (900) étant agencés entre les rangées verticales (110) de modules de paroi de coin (210, 210A, 141) et les rangées verticales (120) de modules de paroi plans (131 ; 131A), et des espaces de réglages radiaux (990) étant agencés entre les secteurs (25) et les rangées verticales (110) de modules de paroi de coin (210, 210A, 141),
les rangées verticales (120) de modules de paroi plans (131 ; 131A) étant disposées sur la paroi porteuse verticale (12) et les secteurs angulaires (25) étant disposés sur la paroi porteuse de fond (11) en fonction des positions des lignes d'intersection sur la paroi porteuse verticale (12),
et dans lequel les critères dimensionnels prédéterminés comprennent :
- un premier critère dimensionnel portant sur la largeur des espaces de réglage verticaux (900) ; et
- un deuxième critère dimensionnel portant sur la largeur des espaces de réglage radiaux (990).

11. Procédé de traçage (2000) selon la revendication 10, dans lequel les critères dimensionnels prédéterminés comprennent en outre :
- un critère d'uniformité des largeurs des espaces de réglage verticaux (900) sur le pourtour de la paroi porteuse verticale (12) ; et/ou
- un critère d'uniformité des largeurs des espaces de réglage radiaux (990) pour tous les secteurs (25) de la paroi de fond (21).

## Patentansprüche

1. Verfolgungsverfahren (2000) für den Bau einer Flüssiggasspeicheranlage (1),
wobei das Verfolgungsverfahren (2000) umfasst:
- Messen (2001) der dreidimensionalen Positionen von N vertikalen Kanten in einer Tragkonstruktion (10), die einen Innenraum aufweist, der durch eine Trägerbodenwand (11) und eine vertikale Trägerwand (12) begrenzt ist, wobei eine Kontur der genannten Trägerbodenwand (11) die Form eines regelmäßigen N-seitigen Polygons mit Maßtoleranzen aufweist, wobei N eine ganze Zahl größer oder gleich 3 ist
wobei die vertikale Trägerwand (12) aus N vertikalen Tragflächen (14) besteht, die durch die N vertikalen Kanten voneinander getrennt sind und eine polygonale Zylinderfläche bilden, deren Führungslinie das genannte Polygon ist, wobei jede der N Seiten des Polygons einem Schnittpunkt der Trägerbodenwand (11) mit einer der genannten vertikalen Tragflächen entspricht (14);
- das Zeichnen von Linien, **dadurch gekennzeichnet, dass** das Verfahren weiterhin umfasst:
- Definieren (2002) einer idealen Sternstruktur (3000), bestehend aus einer vertikalen Achse (3001) und N vertikalen Halbebenen (3002), die durch die vertikale Achse (3001) begrenzt sind und um diese vertikale Achse in azimutalen Richtungen angeordnet sind, die um 360°/N voneinander beabstandet sind;
- Bestimmen (2003) mittels numerischer Simulation die dreidimensionalen Positionen von N Schnittlinien zwischen den N vertikalen Halbebenen (3002) der idealen Sternstruktur (3000) und der N vertikalen Tragabschnitte(14) der vertikalen Trägerwand (12) , wenn die genannte vertikale Achse (3001) im Innenraum der Tragstruktur (10) angeordnet ist, in Abhängigkeit von den gemessenen dreidimensionalen Positionen der N vertikalen Kanten;
- Suchen (2004) einer Zielposition der idealen Sternstruktur (3000) mittels numerischer Simulation, wobei die Zielposition durch die Position eines Schnittpunkts der vertikalen Achse (3001) mit der vertikalen Trägerwand (10) und durch eine azimutale Ausrichtung der idealen Sternstruktur (3000) im Innenraum der Tragstruktur (10) definiert ist,
wobei die Zielposition sicherstellt, dass jede vertikale Halbebene (3002) der idealen Sternstruktur jeweils einen einzigen vertikalen Tragabschnitt (14) der vertikalen Trägerwand (12) an einer Schnittlinie (3010) schneidet, und dass die Abstände zwischen jeder Schnittlinie (3010) und den beiden vertikalen Kanten (13), die den jeweiligen einzigen vertikalen Tragflächen (14) begrenzen, vorgegebene Maßkriterien erfüllen;
- Einzeichnen (2005) der Schnittlinien, die der Zielposition der idealen Sternstruktur (3000) entsprechen, auf den N vertikalen Tragflächen (14), vorzugsweise mit einer Genauigkeit von besser als 5 mm in einer ortoradialen Richtung.

2. Verfolgungsverfahren (2000) gemäß Anspruch 1, wobei das Messen (2001) der dreidimensionalen Positionen der N vertikalen Kanten umfasst:
- Ermitteln von N ersten dreidimensionalen Positionsmesswerten (199), wobei jeder erste dreidimensionale Positionsmesswert (199) eine dreidimensionale Messung der Position eines Punktes ist, der sich in einer ersten Höhe relativ zur tragenden Bodenwand (11) auf einer der N Kanten (13) der vertikalen Trägerwand (12) befindet;
- Ermitteln von N zweiten dreidimensionalen Positionsmesswerten, wobei jeder zweite dreidimensionale Positionsmesswert eine dreidimensionale Messung der Position eines Punktes ist, der sich in einer zweiten Höhe relativ zur Trägerwand (11) auf einer der N Kanten (13) der vertikalen Trägerwand (12) befindet.

3. Verfolgungsverfahren (2000) gemäß Anspruch 2, das weiterhin das Berechnen der Position einer Interpolationsebene (1999) anhand der ersten N dreidimensionalen Positionsmesswerte (199) mittels eines Interpolationsverfahrens umfasst.

4. Verfolgungsverfahren (2000) gemäß Anspruch 3, wobei die N zweiten dreidimensionalen Positionsmessungen in einer zweiten Ebene durchgeführt werden, die parallel zur Interpolationsebene (1999) verläuft und von der Interpolationsebene (1999) um einen Abstand beabstandet ist, der der Differenz zwischen der zweiten Höhe und der ersten Höhe entspricht.

5. Verfolgungsverfahren (2000) gemäß einem der Ansprüche 1 bis 4, wobei die ideale Sternstruktur (3000) aus einer vertikalen Achse (3001), N vertikalen Halbebenen (3002), die durch die vertikale Achse (3001) begrenzt sind und um diese vertikale Achse in azimutalen Richtungen, die um 360°/N voneinander beabstandet sind, angeordnet sind, sowie einer horizontalen Ebene (3009) besteht, wobei die horizontale Ebene (3009) senkrecht zur vertikalen Achse (3001) steht.

6. Verfolgungsverfahren (2000) gemäß einem der Ansprüche 1 bis 5, das weiterhin umfasst:
Aufbringen (2005) eines Referenzpunkts (5) auf der Trägerwand (11), der der genannten Position des Schnittpunkts der vertikalen Achse (3001) mit der Trägerwand (10) entspricht.

7. Verfolgungsverfahren (2000) gemäß Anspruch 6 in Kombination mit Anspruch 5 und einem der Ansprüche 3 und 4, wobei die Position des Schnittpunkts der vertikalen Achse (3001) mit der Trägerwand (10) bestimmt wird, indem die Zielposition der idealen Sternstruktur (3000) in einem der Interpolationsebene (1999) zugeordneten orthogonalen Koordinatensystem rechnerisch ermittelt wird, unter der Auflage, dass die horizontale Ebene (3009) mit der Interpolationsebene (1999) zusammenfällt, wobei eine der Achsen des genannten orthogonalen Koordinatensystems senkrecht zur Interpolationsebene (1999) verläuft.

8. Verfolgungsverfahren (2000) gemäß Anspruch 7, das weiterhin umfasst: Aufbringen (2005) auf die Trägerbodenwand (11) von zweiten Schnittlinien (700) zwischen den N vertikalen Halbebenen (3002) der idealen Sternstruktur (3000) und der Trägerbodenwand, vorzugsweise mit einer Genauigkeit von besser als 5 mm in einer orthogonal Richtung.

9. Verfolgungsverfahren (2000) gemäß einem der Ansprüche 1 bis 8, wobei die Suche (2004) mittels numerischer Simulation nach einer Zielposition der idealen Sternstruktur (3000) unter Verwendung eines evolutionären Algorithmus durchgeführt wird, wobei der evolutionäre Algorithmus als Zielfunktion eine Kostenfunktion verwendet, deren Wert von der Einhaltung vorbestimmter Maßkriterien abhängt.

10. Verfolgungsverfahren (2000) gemäß einem der Ansprüche 1 bis 9, wobei die Flüssiggasspeicheranlage (1) dazu bestimmt ist, ein dichtes und wärmeisolierendes Gefäß (20) zu umfassen, das im Innenraum der Tragkonstruktion (10) installiert ist, wobei das Gefäß (20) eine auf der Trägerbodenwand (11) angeordnete Bodenwand (21) und eine auf der tragenden vertikalen Wand (12) angeordnete vertikale Wand (22) umfasst,
wobei die genannte Bodenwand (21) eine Vielzahl von Winkelsegmenten (25) umfasst, die durch eine Drehung um einen vorgegebenen Winkel um eine vertikale Achse spiegelbildlich zueinander sind, wobei der vorgegebene Winkel gleich k.360°/N ist, wobei k eine positive ganze Zahl ist,
wobei die genannte vertikale Wand (22) eine vertikale Reihe (110) von Eckwandmodulen (210, 210A, 141) umfasst, die entlang jeder Kante (13) der Trägerwand (12) angeordnet ist, welche zwei benachbarte vertikale Tragflächen (14) voneinander trennt, sowie eine vertikale Reihe (120) von ebenen Wandmodulen (131; 131A), die an jedem vertikalen Tragflügel (14) angeordnet ist, wobei
vertikale Einstellräume (900) zwischen den vertikalen Reihen (110) von Eckwandmodulen (210, 210A, 141) und den vertikalen Reihen (120) von ebenen Wandmodulen (131; 131A) angeordnet sind, und
radiale Einstellräume (990) zwischen den Sektoren (25) und den vertikalen Reihen (110) von Eckwandmodulen (210, 210A, 141) angeordnet sind,
wobei die vertikalen Reihen (120) von flachen Wandmodulen (131; 131A) an der vertikalen Trägerwand (12) und die Winkelabschnitte (25) an der Trägerbodenwand (11) entsprechend den Positionen der Schnittlinien an der vertikalen Trägerwand (12) angeordnet sind,
wobei die vorgegebenen Maßkriterien umfassen:
- ein erstes Maßkriterium, das sich auf die Breite der vertikalen Einstellspalte (900) bezieht; und
- ein zweites Maßkriterium, das sich auf die Breite der radialen Einstellspalte (990) bezieht.

11. Verfolgungsverfahren (2000) gemäß Anspruch 10, wobei die vorgegebenen Maßkriterien weiterhin umfassen:
- ein Kriterium für die Gleichmäßigkeit der Breiten der vertikalen Einstellspalte (900) entlang des Umfangs der vertikalen Trägerwand (12); und/oder
- ein Kriterium für die Gleichmäßigkeit der Breiten der radialen Einstellspalte (990) für alle Sektoren (25) der Bodenwand (21).

## Claims

1. A marking out method (2000) for constructing a liquefied gas storage facility (1), the marking out method (2000) comprising:
- measuring (2001) three-dimensional positions of N vertical edges in a load-bearing structure (10) including an internal space delimited by a bottom load-bearing wall (11) and a vertical load-bearing wall (12), a contour of said bottom load-bearing wall (11) being the shape of a regular polygon with N sides having dimensional tolerances, N being an integer greater than or equal to 3,
said vertical load-bearing wall (12) being made up of N vertical load-bearing panels (14) separated by said N vertical edges and forming a polygonal cylindrical surface having said polygon as directrix, in which each of the N sides of the polygon corresponds to an intersection of the bottom load-bearing wall (11) with one of said vertical load-bearing panels (14);
- marking out lines, **characterized in that** the method further comprises:
- defining (2002) an ideal star-shaped structure (3000) consisting of a vertical axis (3001) and N vertical half-planes (3002) delimited by said vertical axis (3001) and oriented around said vertical axis in azimuth directions spaced from one another by 360°/N;
- as a function of the measured three-dimensional positions of the N vertical edges, determining (2003) by numerical simulation the three-dimensional positions of N lines of intersection between the N vertical half-planes (3002) of the ideal star-shaped structure (3000) and the N vertical load-bearing panels (14) of the vertical load-bearing wall (12) when said vertical axis (3001) is placed in the internal space of the load-bearing structure (10);
- seeking (2004) by numerical simulation a target position of the ideal star-shaped structure (3000), the target position being defined by the position of an intersection of the vertical axis (3001) with the bottom load-bearing wall (10) and by an azimuth orientation of the ideal star-shaped structure (3000) in the internal space of the load-bearing structure (10),
wherein the target position ensures that each vertical half-plane (3002) of the ideal star-shaped structure intersects a single respective vertical load-bearing panel (14) of the vertical load-bearing wall (12) at the level of a line of intersection (3010) and that distances between each line of intersection (3010) and the two vertical edges (13) delimiting said respective single vertical load-bearing panel (14) satisfy predetermined dimensional criteria;
- marking out (2005) the lines of intersection corresponding to the target position of the ideal star-shaped structure (3000) on the N vertical load-bearing panels (14), preferably with an accuracy better than 5 mm in an ortho-radial direction.

2. The marking out method (2000) as claimed in claim 1, wherein measuring (2001) the three-dimensional positions of the N vertical edges comprises:
- obtaining N first three-dimensional position measurements (199), each first three-dimensional position measurement (199) being a measurement in three dimensions of the position of a point situated at a first height relative to the bottom load-bearing wall (11) on one of the N edges (13) of the vertical load-bearing wall (12);
- obtaining N second three-dimensional position measurements, each second three-dimensional position measurement being a measurement in three dimensions of the position of a point situated at a second height relative to the bottom load-bearing wall (11) on one of the N edges (13) of the vertical load-bearing wall (12).

3. The marking out method (2000) as claimed in claim 2, which further comprises calculating the position of an interpolation plane (1999) from the N first three-dimensional position measurements (199) using an interpolation method.

4. The marking out method (2000) as claimed in claim 3, wherein the N second three-dimensional position measurements are effected at the level of a second plane that is parallel to the interpolation plane (1999) and at a distance from the interpolation plane (1999) equal to the difference between the second height and the first height.

5. The marking out method (2000) as claimed in any one of claims 1 to 4, wherein the ideal star-shaped structure (3000) consists of a vertical axis (3001), N vertical half-planes (3002) delimited by said vertical axis (3001) and oriented around said vertical axis in azimuth directions spaced from one another by 360°/N, and a horizontal plane (3009), the horizontal plane (3009) being perpendicular to the vertical axis (3001).

6. The marking out method (2000) as claimed in any one of claims 1 to 5, which further comprises:
marking out (2005), on the bottom load-bearing wall (11), a reference point (5) corresponding to said position of the intersection of the vertical axis (3001) with the bottom load-bearing wall (10).

7. The marking out method (2000) as claimed in claim 6 in combination with claim 5 and either of claim 3 and claim 4, wherein said position of the intersection of the vertical axis (3001) with the bottom load-bearing wall (10) is determined by expressing by calculation the target position of the ideal star-shaped structure (3000) in an orthogonal system of axes associated with the interpolation plane (1999), subject to the constraint that the horizontal plane (3009) coincides with the interpolation plane (1999), one of the axes of said orthogonal system of axes being perpendicular to the interpolation plane (1999).

8. The marking out method (2000) as claimed in claim 7, which further comprises:
marking out (2005), on the bottom load-bearing wall (11), second lines of intersection (700) between the N vertical half-planes (3002) of the ideal star-shaped structure (3000) and the bottom load-bearing wall, preferably with an accuracy better than 5 mm in an ortho-radial direction.

9. The marking out method (2000) as claimed in any one of claims 1 to 8, wherein the seeking (2004) by numerical simulation of a target position of the ideal star-shaped structure (3000) is effected using an evolutionary algorithm, the evolutionary algorithm using as objective function a cost function the value of which depends on compliance with predetermined dimensional criteria.

10. The marking out method (2000) as claimed in any one of claims 1 to 9,
wherein the liquefied gas storage facility (1) is intended to include a sealed and thermally-insulating tank (20) stored in the internal space of the load-bearing structure (10), the tank (20) including a bottom wall (21) disposed on the bottom load-bearing wall (11) and a vertical wall (22) disposed on the vertical load-bearing wall (12),
said bottom wall (21) including a plurality of angular sectors (25) that are images of one another by rotation by a predetermined angle about a vertical axis, the predetermined angle being equal to k.360°/N where k is a positive integer,
said vertical wall (22) comprising a vertical row (110) of corner wall modules (210, 210A, 141) disposed along each edge (13) of the vertical load-bearing wall (12) separating two adjacent vertical load-bearing panels (14) and a vertical row (120) of planar wall modules (131; 131A) disposed on each vertical load-bearing panel (14), vertical adjustment spaces (900) being arranged between the vertical rows (110) of corner wall modules (210, 210A, 141) and the vertical rows (120) of planar wall modules (131; 131A), and
radial adjustment spaces (990) being arranged between the sectors (25) and the vertical rows (110) of corner wall modules (210, 210A, 141),
the vertical rows (120) of planar wall modules (131; 131A) being disposed on the vertical load-bearing wall (12) and the angular sectors (25) being disposed on the bottom load-bearing wall (11) as a function of the positions of the lines of intersection on the vertical load-bearing wall (12),
and wherein the predetermined dimensional criteria comprise:
- a first dimensional criterion applying to the width of the vertical adjustment spaces (900); and
- a second dimensional criterion applying to the width of the radial adjustment spaces (990).

11. The marking out method (2000) as claimed in claim 10, wherein the predetermined dimensional criteria further comprise:
- a criterion of uniformity of the widths of the vertical adjustment spaces (900) at the perimeter of the vertical load-bearing wall (12); and/or
- a criterion of uniformity of the widths of the radial adjustment spaces (990) for all the sectors (25) of the bottom wall (21).
